(19) **Europäisches Patentamt**
**European Patent Office**
**Office européen des brevets**

(11) **EP 4 750 186 A1**

(12) **EUROPEAN PATENT APPLICATION**
published in accordance with Art. 153(4) EPC

(43) Date of publication:
**27.05.2026 Bulletin 2026/22**

(21) Application number: **24844291.5**

(22) Date of filing: **22.04.2024**

(51) International Patent Classification (IPC):
**H04W 72/04** (2023.01)

(52) Cooperative Patent Classification (CPC):
**H04W 72/04; H04W 74/04**

(86) International application number:
**PCT/CN2024/089222**

(87) International publication number:
**WO 2025/020595 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.07.2023 PCT/CN2023/108764**

(71) Applicant: **Beijing Xiaomi Mobile Software Co., Ltd.**
**Beijing 100085 (CN)**

(72) Inventors:
• **WANG, Lei**
**Beijing 100085 (CN)**
• **ZHAO, Qun**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **INFORMATION TRANSMISSION METHOD AND APPARATUS, AND COMMUNICATION DEVICE, COMMUNICATION SYSTEM AND STORAGE MEDIUM**

(57) Provided in the embodiments of the present disclosure are an information transmission method and apparatus, and a communication device, a communication system and a storage medium. The method comprises: a first-type terminal receiving first information, wherein the first information comprises a configuration of random access channel occasions (ROs), and the configuration of the ROs comprises: time-domain positions of the ROs and/or frequency-domain positions of the ROs; and according to the configuration of the ROs, determining at least one of the following corresponding to a valid RO among the ROs: a synchronization signal/-physical broadcast channel block(SSB) index, and a random access preamble set, which can be used on the valid RO, wherein the valid RO comprises a first RO and a second RO, a symbol where the first RO is located is a first SB full duplex (SBFD) symbol, and a symbol where the second RO is located is a non-SBFD symbol or a second $BFD symbol, wherein the first-type terminal supports the first RO and the second RO.

FIG. 2a

**Description**

CROSS-REFERENCE TO RELATED APPLICATIONS

This disclosure is based on and claims priority to PCT patent application No. PCT/CN2023/108764, filed on July 21, 2023, the entire contents of which are incorporated herein by reference.

TECHNICAL **FIELD**

The disclosure relates to the field of communication technologies, and in particular to a method and apparatus for information transmission, a communication device, a communication system, and a storage medium.

BACKGROUND

In a mobile communication system (e.g., a 5th generation (5G) mobile communication system), a subcarrier refers to a frequency resource for data transmission. The subcarrier may be divided into a plurality of independent subcarrier frequency bands, each having a fixed bandwidth. The continuous time-domain resources are divided into a plurality of short time periods, each short time period being a slot. One slot may be divided into a plurality of symbols for data transmission, and a duration of each symbol may be fixed.

SUMMARY

As functions of terminals are enhanced, power consumption of the terminals becomes high, thus resulting in weak endurance.

Embodiments of the disclosure provide a method and apparatus for information transmission, a communication device, and a storage medium.

According to a first aspect of embodiments of the disclosure, a method for information transmission is provided. The method includes: sending first information, in which the first information includes a random access channel occasion (RO) configuration, and the RO configuration includes at least one of a time-domain position or a frequency-domain position of ROs; the RO configuration is configured for a terminal to determine at least one of the following parameters corresponding to valid ROs in the ROs: a synchronization signal/physical broadcast channel block (SSB) index, or a set of random access preambles available on the valid ROs; the valid ROs includes: first ROs and second ROs; a symbol where the first RO is located is a first subband full-duplex (SBFD) symbol, and a symbol where the second RO is located is a non-SBFD symbol or a second SBFD symbol; and a first type terminal supports the first RO and the second RO.

According to a second aspect of embodiments of the disclosure, a method for information transmission is provided. The method is performed by a first type terminal and includes: receiving first information, in which the first information includes an RO configuration, and the RO configuration includes at least one of a time-domain position or a frequency-domain position of ROs; and

determining, based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol; and the first type terminal supports the first ROs and the second ROs.

According to a third aspect of embodiments of the disclosure, a method for information transmission is provided. The method includes:

sending, by a network device, first information to a first type terminal, in which the first information includes an RO configuration, and the RO configuration includes at least one of a time-domain position or a frequency-domain position of ROs; and
determining, by the first type terminal based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol; and
the first type terminal supports the first ROs and the second ROs.

According to a fourth aspect of embodiments of the disclosure, a network device is provided. The network device includes:

a transceiver module, configured to send first information, in which the first information includes an RO configuration, and the RO configuration includes at least one of a time-domain position or a frequency-domain position of ROs; the RO configuration is configured for a terminal to determine at least one of the following parameters corresponding to valid ROs in the ROs: an SSB index, or a set of random access preambles available on the valid ROs; the valid ROs includes: first ROs and second ROs; a symbol where the first RO is located is a first SBFD symbol, and a symbol where the second RO is located is a non-SBFD symbol or a second SBFD symbol; and
a first type terminal supports the first RO and the second RO.

According to a fifth aspect of embodiments of the disclosure, a first type terminal is provided. The first type terminal includes:

a transceiver module, configured to receive first information, in which the first information includes an RO configuration, and the RO configuration includes at least one of a time-domain position or a frequency-domain position of ROs; and
a processing module, configured to determine, based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol; and
the first type terminal supports the first ROs and the second ROs.

According to a sixth aspect of embodiments of the disclosure, a communication system is provided. The communication system includes:

a first type terminal, configured to perform the method according to the first aspect, and
a network device, configured to perform the method according to the second aspect.

According to a seventh aspect of embodiments of the disclosure, a communication device is provided. The communication device includes:

one or more processors,
in which the one or more processors are configured to call instructions to cause the communication device to perform the method according to the first aspect or the second aspect.

According to an eighth aspect of embodiments of the disclosure, a storage medium is provided. The storage medium stores instructions, in which the instructions, when executed on a communication device, cause the communication device to implement the method according to the first aspect or the second aspect.

The mapping for the first ROs and the second Ros is achieved, thus improving the utilization efficiency of communication resources.

It should be understood that the above general description and the following detailed description are only exemplary and explanatory, and do not limit the embodiments of the disclosure.

**BRIEF DESCRIPTION OF THE DRAWINGS**

The figures here are incorporated into the specification and constitute a part of the specification, showing that they conform to the embodiments of the disclosure, and are used together with the specification to explain the principles of the embodiments of the disclosure.

FIG. 1a is an exemplary diagram illustrating an architecture of a communication system according to an exemplary embodiment.

FIG. 1b is a diagram illustrating a symbol configuration according to an exemplary embodiment.

FIG. 1c is a diagram illustrating a symbol configuration according to an exemplary embodiment.

FIG. 1d is a diagram illustrating a symbol configuration according to an exemplary embodiment.

FIG. 1e is a diagram illustrating a symbol configuration according to an exemplary embodiment.

FIG. 1f is a diagram illustrating a symbol configuration according to an exemplary embodiment.

FIG. 1g is a diagram illustrating a symbol configuration according to an exemplary embodiment.

FIG. 1h is a diagram illustrating a symbol configuration according to an exemplary embodiment.

FIG. 2a is a flowchart illustrating a method for information transmission according to an exemplary embodiment.

FIG. 2b is a diagram illustrating a symbol configuration according to an exemplary embodiment.

FIG. 2c is a diagram illustrating a symbol configuration according to an exemplary embodiment.

FIG. 2d is a diagram illustrating a symbol configuration according to an exemplary embodiment.

FIG. 2e is a diagram illustrating a symbol configuration according to an exemplary embodiment.

FIG. 2f is a diagram illustrating a symbol configuration according to an exemplary embodiment.

FIG. 2g is a diagram illustrating a symbol configuration according to an exemplary embodiment.

FIG. 2h is a diagram illustrating a symbol configuration according to an exemplary embodiment.

FIG. 2i is a diagram illustrating a symbol configuration according to an exemplary embodiment.

FIG. 2j is a diagram illustrating a symbol configuration according to an exemplary embodiment.

FIG. 3a is a flowchart illustrating a method for information transmission according to an exemplary embodiment.

FIG. 3b is a flowchart illustrating a method for information transmission according to an exemplary embodiment.

FIG. 4 is a flowchart illustrating a method for information transmission according to an exemplary embodiment.

FIG. 5 is a flowchart illustrating a method for information transmission according to an exemplary embodiment.

FIG. 6 is a flowchart illustrating a method for information transmission according to an exemplary embodiment.

FIG. 7a is a block diagram illustrating a first type terminal according to an exemplary embodiment.

FIG. 7b is a block diagram illustrating a network device according to an exemplary embodiment.

FIG. 8a is a block diagram illustrating a user equipment (UE) according to an exemplary embodiment.

FIG. 8b is a block diagram illustrating a communication device according to an exemplary embodiment.

## DETAILED DESCRIPTION

Embodiments of the disclosure provide a method and apparatus for information transmission, a communication device, and a storage medium.
In a first aspect, embodiments of the disclosure provide a method for information transmission. The method performed by a first type terminal. The method includes:

receiving first information, in which the first information includes a random access channel occasion (RO) configuration, and the RO configuration includes at least one of a time-domain position or a frequency-domain position of ROs;
determining, based on the RO configuration, at least one of the following parameters corresponding to valid ROs in the ROs: a synchronization signal/physical broadcast channel block (SSB) index, or a set of random access preambles available on the valid ROs, in which the valid ROs include first ROs and second ROs; a symbol where the first RO is located is a first subband full-duplex (SBFD) symbol, and a symbol where the second RO is located is a non-SBFD symbol or a second SBFD symbol; and

the first type terminal supports the first ROs and the second ROs.

In the above embodiment, the first type terminal performs SSB index mapping for the first ROs and the second ROs and determines a set of random access preambles for the first ROs and the second ROs, thus enabling random access on the configured first ROs and second ROs and improving the resource utilization efficiency.

In combination with some embodiments of the first aspect, in some embodiments, determining, based on the RO configuration, the SSB index corresponding to the valid ROs in the ROs includes:

determining at least one SSB index corresponding to each of the first ROs in one cycle mapping.

In the above embodiment, the first type terminal determines the first ROs based on the SBFD symbols, thus enabling SBFD symbol-based random access on the configured first ROs and improving the resource utilization efficiency.

In combination with some embodiments of the first aspect, in some embodiments, determining, based on the RO configuration, the SSB index corresponding to the valid ROs in the ROs includes:

in one cycle mapping, mapping each SSB index among N SSB indices to m different first ROs,
in which the N SSB indices are not mapped to the second ROs; and
m is a positive integer, and the N SSB indices are all SSB indices configured by a network device.

In the above embodiment, the first type terminal maps the SSB indices to the first ROs based on the SBFD symbols, and a second type terminal maps the SSB indices to the second ROs based on the non-SBFD symbols. On one hand, processing complexity caused by mapping for two types of ROs at the first type terminal is reduced; on the other hand, SBFD symbol-based random access may be achieved on the configured first ROs, thus improving the resource utilization efficiency.

In combination with some embodiments of the first aspect, in some embodiments, determining, based on the RO configuration, the SSB index corresponding to the valid ROs in the ROs includes: determining at least one first SSB index corresponding to each of the first ROs, and at least one second SSB index corresponding to each of the second ROs.

In the above embodiment, the first type terminal determines the first ROs based on the SBFD symbols and the second ROs based on the non-SBFD symbols, thus improving the utilization efficiency of ROs.

In combination with some embodiments of the first aspect, in some embodiments, determining the set of random access preambles available on the valid ROs includes:

using a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In the above embodiment, the first type terminal and the second type terminal adopt different sets of random access preambles for the second ROs, thus enabling the network device to identify a type of an terminal accessing to the network device. Thus, the network device may correctly understand an optimal beam for the first type terminal and an optimal beam for the second type terminal.

In combination with some embodiments of the first aspect, in some embodiments, the at least one second SSB index corresponding to each of the second ROs is the same as at least one third SSB index adopted by a second type terminal for each of the second ROs.

In the above embodiment, the first type terminal and the second type terminal share the same understanding of the second ROs, thus enabling the network device to accurately understand the optimal beam for the first type terminal and the optimal beam for the second type terminal.

In combination with some embodiments of the first aspect, in some embodiments, determining the at least one first SSB index corresponding to each of the first ROs, and the at least one second SSB index corresponding to each of the second ROs includes:

determining the at least one third SSB index adopted by the second type terminal for each of the second ROs; and forming a third set of SSB indices including all the third SSB indices, in which the first SSB index is a remaining SSB index among N SSB indices after removing the third set of SSB indices, and the N SSB indices are all SSB indices configured by a network device.

In the above embodiment, the first type terminal and the second type terminal share the same understanding of the second ROs, thus enabling the network device to accurately understand the optimal beam for the first type terminal and the optimal beam for the second type terminal.

In combination with some embodiments of the first aspect, in some embodiments, determining the SSB index corresponding to the valid ROs in the ROs includes:

performing k cycle mappings of N SSB indices within one association period, in which k is a positive integer; and in one cycle mapping, mapping each SSB index among the N SSB indices to m different valid ROs, in which m is a positive integer; and the N SSB indices are all SSB indices configured by a network device.

In the above embodiment, the first type terminal and the second type terminal perform mapping based on the same rule, thus achieving mapping for the first ROs and the second ROs and enabling effective communication.

In combination with some embodiments of the first aspect, in some embodiments, determining the SSB index corresponding to the valid ROs in the ROs includes: mapping the SSB indices to the valid ROs based on a first manner, in which the first manner includes at least one of:

mapping the SSB indices in ascending order to a plurality of valid ROs with the same time domain position, the plurality of valid ROs being in an ascending order of frequency domain positions; or
mapping the SSB indices in ascending order to a plurality of valid ROs with different time-domain positions, the plurality of valid ROs being in an order from front to back of time-domain positions.

In the above embodiment, the first type terminal and the second type terminal perform mapping based on the same rule, thus achieving mapping for the first ROs and the second ROs and enabling effective communication. Processing complexity caused by different mapping rules is reduced.

In combination with some embodiments of the first aspect, in some embodiments, the first information includes at least one of:

frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

In the above embodiment, the first ROs and the second ROs are configured via different pieces of information respectively, thus improving the flexibility of RO configuration.

In combination with some embodiments of the first aspect, in some embodiments, the first SBFD symbol includes: a symbol for which the network device configures a carrier component (CC) as downlink (DL) via a first signaling and configures the symbol as an SBFD symbol via a second signaling; and

the second SBFD symbol includes: a symbol for which the network device configures the CC as flexible (F) or uplink (UL) via a first signaling and configures the symbol as an SBFD symbol via a second signaling.

In the above embodiment, the first signaling and the second signaling perform a semi-static configuration for the CC, thus improving the configuration flexibility.

In combination with some embodiments of the first aspect, in some embodiments, the first signaling includes: a time division duplexing (TDD) UL-DL common configuration; and

the second signaling includes: a semi-static SBFD configuration.

In the above embodiment, the TDD UL-DL common configuration and the semi-static SBFD configuration are used to perform semi-static configuration for the CC, thus improving the configuration flexibility.

In combination with some embodiments of the first aspect, in some embodiments, the first information includes physical random access channel (PRACH) configuration information for the first type terminal; and the method further includes at least one of:

determining a time-domain position of a third RO in the ROs based on the PRACH configuration information; or
determining time-domain positions of a third RO and a fourth RO in the ROs based on the PRACH configuration information.

In the above embodiment, the time-domain position of the third RO, and/or the time-domain positions of the third RO and the fourth RO may be determined based on the PRACH configuration information.

In combination with some embodiments of the first aspect, in some embodiments, determining the time-domain position of the third RO in the ROs based on the PRACH configuration information includes:

determining the time-domain position of the third RO based on a PRACH configuration index (prach-Configuration-nIndex) indicated by the PRACH configuration information and a first predetermined mapping relationship; and/or determining the time-domain positions of the third RO and the fourth RO in the ROs based on the PRACH configuration information includes: determining the time-domain positions of the third RO and the fourth RO based on the prach-ConfigurationIndex indicated by the PRACH configuration information and a first predetermined mapping relationship.

In the above embodiment, the time-domain position of the third RO, and/or the time-domain positions of the third RO and the fourth RO may be determined based on the prach-ConfigurationIndex and the first predetermined mapping relationship.

In combination with some embodiments of the first aspect, in some embodiments, a symbol where the third RO is located includes a third SBFD symbol, a symbol where the fourth RO is located does not include a third SBFD symbol, and the third SBFD symbol is one of:

a symbol for which a network device configures a CC as DL via a first signaling and configures the symbol as an SBFD symbol via a second signaling; or
a symbol for which a network device configures a CC as DL or F via a first signaling and configures the symbol as an SBFD symbol via a second signaling.

In combination with some embodiments of the first aspect, in some embodiments, the method further includes: determining the first predetermined mapping relationship.

In the above embodiment, the first predetermined mapping relationship may be explicitly determined.

In combination with some embodiments of the first aspect, in some embodiments, determining the first predetermined mapping relationship includes one of:

determining the first predetermined mapping relationship based on communication protocol rule information;
determining the first predetermined mapping relationship based on higher layer configuration information; or
determining the first predetermined mapping relationship based on indication information dynamically sent by the network device.

In the above embodiment, the first predetermined mapping relationship may be explicitly determined via different ways.

In combination with some embodiments of the first aspect, in some embodiments, determining the first predetermined mapping relationship includes:

determining the first predetermined mapping relationship based on a type of a frequency range (FR) where the third RO and/or the fourth RO is located,
in which the FR is a frequency range 1 (FR1) or a frequency range 2 (FR2).

In the above embodiment, the first predetermined mapping relationship may be explicitly determined based on the type of the FR.

In combination with some embodiments of the first aspect, in some embodiments, determining the first predetermined mapping relationship based on the type of the FR where the third RO and/or the fourth RO is located includes:
determining that the third RO and/or the fourth RO is located in the FR1, and the first predetermined mapping relationship is one of:

a second predetermined mapping relationship, in which the second predetermined mapping relationship is used for random access configuration of a paired spectrum or a supplementary UL in the FR1;
a third predetermined mapping relationship, in which the third predetermined mapping relationship is used for random access configuration of an unpaired spectrum in the FR1; or
a fourth predetermined mapping relationship, in which the fourth predetermined mapping relationship is used for random access configuration of an unpaired spectrum in the FR1 for the first type terminal.

In the above embodiment, the first predetermined mapping relationship may be determined in a case that the third RO and/or the fourth RO is located in the FR1.

In combination with some embodiments of the first aspect, in some embodiments, determining the first predetermined mapping relationship based on the type of the FR where the third RO and/or the fourth RO is located includes:
determining that the third RO and/or the fourth RO is located in the FR2, and the first predetermined mapping relationship is one of:

a fifth predetermined mapping relationship, in which the fifth predetermined mapping relationship is used for random access configuration of an unpaired spectrum in the FR2; or

a sixth predetermined mapping relationship, in which the sixth predetermined mapping relationship is used for random access configuration of an unpaired spectrum in the FR2 for the first type terminal.

In the above embodiment, the second predetermined mapping relationship may be determined in a case that the third RO and/or the fourth RO is located in the FR2.

In combination with some embodiments of the first aspect, in some embodiments, the second predetermined mapping relationship, the third predetermined mapping relationship, the fourth predetermined mapping relationship, the fifth predetermined mapping relationship and/or the sixth predetermined mapping relationship is a mapping relationship determined based on protocol rule information.

In a second aspect, embodiments of the disclosure provide a method for information transmission. The method includes:

sending first information, in which the first information includes an RO configuration, and the RO configuration includes at least one of a time-domain position or a frequency-domain position of ROs; the RO configuration is configured for a terminal to determine at least one of the following parameters corresponding to valid ROs in the ROs: an SSB index, or a set of random access preambles available on the valid ROs; the valid ROs includes: first ROs and second ROs; a symbol where the first RO is located is a first SBFD symbol, and a symbol where the second RO is located is a non-SBFD symbol or a second SBFD symbol; and

a first type terminal supports the first RO and the second RO.

In the above embodiment, the first type terminal performs SSB index mapping for the first ROs and the second ROs and determines a set of random access preambles for the first ROs and the second ROs, thus enabling random access on the configured first ROs and second ROs and improving the resource utilization efficiency.

In combination with some embodiments of the second aspect, in some embodiments, the RO configuration is configured for the first type terminal to determine at least one SSB index corresponding to each of the first ROs in one cycle mapping.

In the above embodiment, the first type terminal determines the first ROs based on the SBFD symbols, thus enabling SBFD symbol-based random access on the configured first ROs and improving the resource utilization efficiency.

In combination with some embodiments of the second aspect, in some embodiments, in one cycle mapping, each SSB index among N SSB indices is mapped to m different first ROs, in which the N SSB indices are not mapped to the second ROs; and m is a positive integer, and the N SSB indices are all SSB indices configured by a network device.

In the above embodiment, the first type terminal maps the SSB indices to the first ROs based on the SBFD symbols, and a second type terminal maps the SSB indices to the second ROs based on the non-SBFD symbols. On one hand, processing complexity caused by mapping for two types of ROs at the first type terminal is reduced; on the other hand, SBFD symbol-based random access may be achieved on the configured first ROs, thus improving the resource utilization efficiency.

In combination with some embodiments of the second aspect, in some embodiments, the RO configuration is configured to determine at least one first SSB index corresponding to each of the first ROs, and at least one second SSB index corresponding to each of the second ROs.

In the above embodiment, the first type terminal determines the first ROs based on the SBFD symbols and the second ROs based on the non-SBFD symbols, thus improving the utilization efficiency of ROs.

In combination with some embodiments of the second aspect, in some embodiments, the RO configuration is configured for the first type terminal to use a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In the above embodiment, the first type terminal and the second type terminal adopt different sets of random access preambles for the second ROs, thus enabling the network device to identify a type of an terminal accessing to the network device. Thus, the network device may correctly understand an optimal beam for the first type terminal and an optimal beam for the second type terminal.

In combination with some embodiments of the second aspect, in some embodiments, the at least one second SSB index corresponding to each of the second ROs is the same as at least one third SSB index adopted by a second type terminal for each of the second ROs.

In the above embodiment, the first type terminal and the second type terminal share the same understanding of the second ROs, thus enabling the network device to accurately understand the optimal beam for the first type terminal and the optimal beam for the second type terminal.

In combination with some embodiments of the second aspect, in some embodiments, the RO configuration is configured for the first type terminal to determine the at least one third SSB index adopted by the second type terminal for each of the second ROs; and form a third set of SSB indices including all the third SSB indices, in which the first SSB index is a remaining SSB index among N SSB indices after removing the third set of SSB indices, and the N SSB indices are all SSB indices configured by a network device.

In the above embodiment, the first type terminal and the second type terminal share the same understanding of the second ROs, thus enabling the network device to accurately understand the optimal beam for the first type terminal and the optimal beam for the second type terminal.

In combination with some embodiments of the second aspect, in some embodiments, the first type terminal performs k cycle mappings of N SSB indices within one association period, in which k is a positive integer; and in one cycle mapping, each SSB index among the N SSB indices is mapped to m different valid ROs, in which m is a positive integer; and the N SSB indices are all SSB indices configured by a network device.

In the above embodiment, the first type terminal and the second type terminal perform mapping based on the same rule, thus achieving mapping for the first ROs and the second ROs and enabling effective communication.

In combination with some embodiments of the second aspect, in some embodiments, the first type terminal maps the SSB indices to the valid ROs based on a first manner, and the first manner includes at least one of:

mapping the SSB indices in ascending order to a plurality of valid ROs with the same time domain position, the plurality of valid ROs being in an ascending order of frequency domain positions; or
mapping the SSB indices in ascending order to a plurality of valid ROs with different time-domain positions, the plurality of valid ROs being in an order from front to back of time-domain positions.

In the above embodiment, the first type terminal and the second type terminal perform mapping based on the same rule, thus achieving mapping for the first ROs and the second ROs and enabling effective communication. Processing complexity caused by different mapping rules is reduced.

In combination with some embodiments of the second aspect, in some embodiments, the first information includes at least one of:

frequency-domain resources of the first ROs; time-domain resource indices associated with the first ROs; a configuration associated with a mapping relationship between the first ROs and the SSB indices;
frequency-domain resources of the second ROs; time-domain resource indices associated with the second ROs; or a configuration associated with a mapping relationship between the second ROs and the SSB indices.

In the above embodiment, the first ROs and the second ROs are configured via different pieces of information respectively, thus improving the flexibility of RO configuration.

In combination with some embodiments of the second aspect, in some embodiments, the first SBFD symbol includes: a symbol for which the network device configures a CC as DL via a first signaling and configures the symbol as an SBFD symbol via a second signaling; and the second SBFD symbol includes: a symbol for which the network device configures the CC as F or UL via a first signaling and configures the symbol as an SBFD symbol via a second signaling.

In the above embodiment, the first signaling and the second signaling perform a semi-static configuration for the CC, thus improving the configuration flexibility.

In combination with some embodiments of the second aspect, in some embodiments, the first signaling includes: a TDD UL-DL common configuration; and the second signaling includes: a semi-static SBFD configuration.

In the above embodiment, the TDD UL-DL common configuration and the semi-static SBFD configuration are used to perform semi-static configuration for the CC, thus improving the configuration flexibility.

In combination with some embodiments of the second aspect, in some embodiments, the RO configuration is configured for the second type terminal to determine at least one SSB index corresponding to each of the second ROs in one cycle mapping.

In combination with some embodiments of the second aspect, in some embodiments, the second type terminal performs i cycle mappings of N SSB indices within one association period, in which i is a positive integer; and in one cycle mapping, each SSB index among the N SSB indices is mapped to j different valid ROs, in which j is a positive integer; and the N SSB indices are all SSB indices configured by a network device.

In a third aspect, embodiments of the disclosure provide a method for information transmission. The method includes:

sending, by a network device, first information to a first type terminal, in which the first information includes an RO configuration, and the RO configuration includes at least one of a time-domain position or a frequency-domain position of ROs; and

determining, by the first type terminal based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol; and

the first type terminal supports the first ROs and the second ROs.

In a fourth aspect, embodiments of the disclosure provide a first type terminal. The first type terminal includes:

a transceiver module, configured to receive first information, in which the first information includes an RO configuration, and the RO configuration includes at least one of a time-domain position or a frequency-domain position of ROs; and

a processing module, configured to determine, based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol; and

the first type terminal supports the first ROs and the second ROs.

In combination with some embodiments of the fourth aspect, in some embodiments, determining, based on the RO configuration, the SSB index corresponding to the valid ROs in the ROs includes:

determining at least one SSB index corresponding to each of the first ROs in one cycle mapping.

In combination with some embodiments of the fourth aspect, in some embodiments, the processing module is specifically configured to:

in one cycle mapping, map each SSB index among N SSB indices to m different first ROs,

in which the N SSB indices are not mapped to the second ROs; and

m is a positive integer, and the N SSB indices are all SSB indices configured by a network device.

In combination with some embodiments of the fourth aspect, in some embodiments, the processing module is specifically configured to: determine at least one first SSB index corresponding to each of the first ROs, and at least one second SSB index corresponding to each of the second ROs.

In combination with some embodiments of the fourth aspect, in some embodiments, the processing module is specifically configured to:

use a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In combination with some embodiments of the fourth aspect, in some embodiments, the at least one second SSB index corresponding to each of the second ROs is the same as at least one third SSB index adopted by a second type terminal for each of the second ROs.

In combination with some embodiments of the fourth aspect, in some embodiments, the processing module is specifically configured to:

determine the at least one third SSB index adopted by the second type terminal for each of the second ROs; and form a third set of SSB indices including all the third SSB indices, in which the first SSB index is a remaining SSB index among N SSB indices after removing the third set of SSB indices, and the N SSB indices are all SSB indices configured by a network device.

In combination with some embodiments of the fourth aspect, in some embodiments, the processing module is specifically configured to:

perform k cycle mappings of N SSB indices within one association period, in which k is a positive integer; and in one cycle mapping, map each SSB index among the N SSB indices to m different valid ROs, in which m is a positive integer; and the N SSB indices are all SSB indices configured by a network device.

In combination with some embodiments of the fourth aspect, in some embodiments, the processing module is specifically configured to: map the SSB indices to the valid ROs based on a first manner, in which the first manner includes at least one of:

mapping the SSB indices in ascending order to a plurality of valid ROs with the same time domain position, the plurality of valid ROs being in an ascending order of frequency domain positions; or
mapping the SSB indices in ascending order to a plurality of valid ROs with different time-domain positions, the plurality of valid ROs being in an order from front to back of time-domain positions.

In combination with some embodiments of the fourth aspect, in some embodiments, the first information includes at least one of:

frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

In combination with some embodiments of the fourth aspect, in some embodiments, the first SBFD symbol includes: a symbol for which the network device configures a CC as DL via a first signaling and configures the symbol as an SBFD symbol via a second signaling; and
the second SBFD symbol includes: a symbol for which the network device configures the CC as F or UL via a first signaling and configures the symbol as an SBFD symbol via a second signaling.

In combination with some embodiments of the fourth aspect, in some embodiments, the first signaling includes: a TDD UL-DL common configuration; and
the second signaling includes: a semi-static SBFD configuration.

In a fifth aspect, embodiments of the disclosure provide a network device. The network device includes:

a transceiver module, configured to send first information, in which the first information includes an RO configuration, and the RO configuration includes at least one of a time-domain position or a frequency-domain position of ROs; the RO configuration is configured for a terminal to determine at least one of the following parameters corresponding to valid ROs in the ROs: an SSB index, or a set of random access preambles available on the valid ROs; the valid ROs includes: first ROs and second ROs; a symbol where the first RO is located is a first SBFD symbol, and a symbol where the second RO is located is a non-SBFD symbol or a second SBFD symbol; and
a first type terminal supports the first RO and the second RO.

In combination with some embodiments of the fifth aspect, in some embodiments, the RO configuration is configured for the first type terminal to determine at least one SSB index corresponding to each of the first ROs in one cycle mapping.

In combination with some embodiments of the fifth aspect, in some embodiments, in one cycle mapping, each SSB index among N SSB indices is mapped to m different first ROs, in which the N SSB indices are not mapped to the second ROs; and m is a positive integer, and the N SSB indices are all SSB indices configured by a network device.

In combination with some embodiments of the fifth aspect, in some embodiments, the RO configuration is configured to determine at least one first SSB index corresponding to each of the first ROs, and at least one second SSB index corresponding to each of the second ROs.

In combination with some embodiments of the fifth aspect, in some embodiments, the RO configuration is configured for the first type terminal to use a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In combination with some embodiments of the fifth aspect, in some embodiments, the at least one second SSB index corresponding to each of the second ROs is the same as at least one third SSB index adopted by a second type terminal for each of the second ROs.

In combination with some embodiments of the fifth aspect, in some embodiments, the RO configuration is configured for the first type terminal to determine the at least one third SSB index adopted by the second type terminal for each of the second ROs; and form a third set of SSB indices including all the third SSB indices, in which the first SSB index is a remaining SSB index among N SSB indices after removing the third set of SSB indices, and the N SSB indices are all SSB indices configured by a network device.

In combination with some embodiments of the fifth aspect, in some embodiments, the first type terminal performs k cycle mappings of N SSB indices within one association period, in which k is a positive integer; and
in one cycle mapping, each SSB index among the N SSB indices is mapped to m different valid ROs, in which m is a positive integer; and the N SSB indices are all SSB indices configured by a network device.

In combination with some embodiments of the fifth aspect, in some embodiments, the first type terminal maps the SSB indices to the valid ROs based on a first manner, and the first manner includes at least one of:

mapping the SSB indices in ascending order to a plurality of valid ROs with the same time domain position, the plurality of valid ROs being in an ascending order of frequency domain positions; or

mapping the SSB indices in ascending order to a plurality of valid ROs with different time-domain positions, the plurality of valid ROs being in an order from front to back of time-domain positions.

In combination with some embodiments of the fifth aspect, in some embodiments, the first information includes at least one of:

frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

In combination with some embodiments of the fifth aspect, in some embodiments, the first SBFD symbol includes: a symbol for which the network device configures a CC as DL via a first signaling and configures the symbol as an SBFD symbol via a second signaling; and

the second SBFD symbol includes: a symbol for which the network device configures the CC as F or UL via a first signaling and configures the symbol as an SBFD symbol via a second signaling.

In combination with some embodiments of the fifth aspect, in some embodiments, the first signaling includes: a TDD UL-DL common configuration; and

the second signaling includes: a semi-static SBFD configuration.

In combination with some embodiments of the fifth aspect, in some embodiments, the RO configuration is configured for the second type terminal to determine at least one SSB index corresponding to each of the second ROs in one cycle mapping.

In combination with some embodiments of the fifth aspect, in some embodiments, the second type terminal performs i cycle mappings of N SSB indices within one association period, in which i is a positive integer; and

in one cycle mapping, each SSB index among the N SSB indices is mapped to j different valid ROs, in which j is a positive integer; and the N SSB indices are all SSB indices configured by a network device.

In a sixth aspect, embodiments of the disclosure provide a communication system. The communication system includes:

a first type terminal, configured to perform the method according to the first aspect; and
a network device, configured to perform the method according to the second aspect.

In a seventh aspect, embodiments of the disclosure provide a communication device. The communication device includes:

one or more processors,
in which the one or more processors are configured to call instructions to cause the communication device to perform the method according to the first aspect or the second aspect.

In an eighth aspect, embodiments of the disclosure provide a storage medium. The storage medium stores instructions, in which the instructions, when executed on a communication device, cause the communication device to implement the method according to the first aspect or the second aspect.

It may be understood that the access network device, the terminal, the communication device, the communication system, the storage medium, the program product, and the computer program are all used to implement the method in the embodiments of the disclosure. Thus, regarding beneficial effects they may achieve, reference may made be to the beneficial effects in the corresponding methods, which will not be repeated herein.

Embodiments of the disclosure provide a method and apparatus for information transmission, a communication device, a communication system and a storage medium. In some embodiments, terms such as "method for information transmission" and "method for information processing" may be used interchangeably, terms such as "apparatus for information transmission" and "apparatus for information processing" may be used interchangeably, and terms such as "information processing system", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined; in addition, respective embodiments may be arbitrarily combined, for example, some or all steps of different embodiments may be arbitrarily combined, and a certain embodiment may be arbitrarily combined with optional implementations of other embodiments.

In various embodiments of the disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms "time/frequency", "time-frequency domain" etc., refer to a time domain and/or a frequency domain.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., an access network device, a core network device, etc.) included in the network.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced with the terminal. For example, various embodiments of the disclosure may also be applied to a structure in which communication between the access network device, the core network device, or the network device and the terminal is replaced with communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced with the language (for example, "side") corresponding to the communication between the terminals. For example, the uplink channel, the downlink channel, etc. may be replaced with the side channel, and the uplink, the downlink, etc. may be replaced with sidelink.

In some embodiments, the terminal may be replaced with the access network device, the core network device, or the network device. In this case, the access network device, the core network device, or the network device may also be configured to have a structure that has all or part of functions of the terminal.

In some embodiments, the acquisition of data, information, etc. may comply with the laws and regulations of the country where the data is obtained.

In some embodiments, data, information, etc. may be obtained with the consent from users.

In addition, each element, each row, or each column in the table of the embodiments of the disclosure may be implemented as an independent embodiment, and the combination of any elements, any rows, or any columns may also be implemented as an independent embodiment.

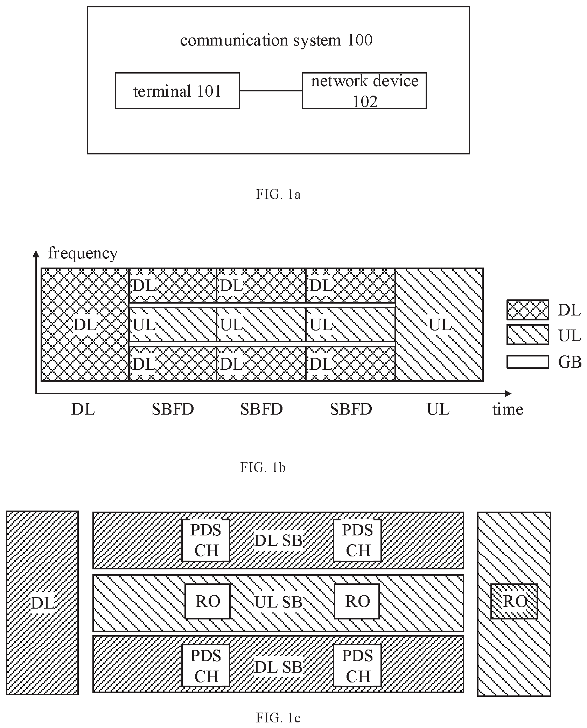

FIG. 1a is a diagram illustrating an architecture of a communication system according to an embodiment of the disclosure.

As shown in FIG. 1a, the communication system 100 includes a first type terminal 101 and a network device 102. Optionally, the communication system 100 may also include a second terminal.

In some embodiments, the network device 102 includes at least one of: an access network device, or a core network device.

In some embodiments, the first type terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited herein.

In some embodiments, the technical solution of the disclosure may be applicable to an Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network may include, for example, at least one of an evolved packet core (EPC), a 5G core network (5GCN), or a next generation core (NGC).

It may be understood that the communication system described in the embodiments of the disclosure aims to more clearly illustrate the technical solution of the embodiments of the disclosure, and does not constitute a limitation on the technical solution disclosed in the embodiments of the disclosure. A person skilled in the art may know that with the evolution of the system architecture and the emergence of new service scenarios, the technical solution disclosed in the embodiments of the disclosure are also applicable to similar technical problems.

The following embodiments of the disclosure may be applied to the communication system 100 or part of the subjects shown in FIG. 1a, but are not limited herein. The subjects shown in FIG. 1a are examples, and the communication system may include all or part of the subjects in FIG. 1a, or may include other subjects other than those shown in FIG. 1a. The number and form of the subjects are arbitrary. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In order to improve UL coverage and throughput, data communication may be performed via the SBFD technology. Specifically, on a CC in a DL symbol or an F symbol, a frequency-domain range is divided into a plurality of subbands (SBs), including one UL SB and at least one DL SB. A base station may send a DL signal in the DL SB and simultaneously receive a UL signal in the UL SB. A symbol may be configured as a DL symbol or an F symbol by TDD-UL-DL-ConfigCommon or TDD-UL-DL-ConfigDedicated, or indicated as a DL symbol or an F symbol by DCI format 2_0. Further, a symbol may be configured or indicated as an SBFD symbol by other signaling. A symbol may be referred to as the SBFD symbol when the symbol includes both the DL SB and the UL SB in the frequency domain. Similarly, when a slot includes at least one SBFD symbol among a plurality of symbols, the slot may be referred to as an SBFD slot. As shown in FIG. 1b, slot #0 is a DL slot including 14 DL symbols; slots #1 to slots #3 are SBFD slots, each including 14 SBFD symbols; and slot #4 is a UL slot including 14 UL symbols.

Further, as shown in FIG. 1b, a guard band (GB) may exist between a DL SB and a UL SB to reduce interference between DL signals in the DL SB and UL signals in the UL SB via frequency-domain isolation.

In the SBFD symbol, a frequency-domain range available for UL transmission includes the following two cases:

1. the GB and the DL SB are not available for the UL transmission, and the UL SB is available for the UL transmission; and

2. the DL SB is not available for the UL transmission, and the UL SB and the GB are available for the UL transmission.

In the SBFD symbol, the frequency-domain range available for the UL transmission may be referred to as a UL frequency-domain range, and the frequency-domain range not available for the UL transmission may be referred to as a non-UL frequency-domain range (i.e., a range outside the UL frequency-domain range). Based on the above analysis, it may be seen that the UL frequency-domain range of a non-SBFD symbol is different from that of an SBFD symbol. The UL frequency-domain range is a UL frequency-domain range on the CC. In the SBFD symbol, a UL frequency-domain range on a UL BWP refers to a frequency-domain range where UL frequency-domain ranges on the BWP and the CC overlap. Unless otherwise specified, the UL frequency-domain range in embodiments refers to the UL frequency-domain range on the BWP.

In the random access, when the UE is in an idle state, information such as a received signal strength of SSB beams from an initial access cell may be measured and an optimal SSB beam may be selected. In a direction of the optimal SSB beam, a physical random access channel (PRACH) signal is transmitted on an RO to perform random access. Further, the UE in other states may also send a PRACH signal on an RO to perform random access. The random access includes: contention-based random access (CBRA) and contention-free random access (CFRA). In the CBRA, a plurality of UEs may use the same preamble, that is, PRACH signals of two UEs may collide, which may lead to a random access failure.

In the SBFD symbol, the UE may send UL signals in a UL SB. In this case, as shown in FIG. 1c, configuring ROs in SBFD symbols may increase the number of ROs, compared to configuring ROs only in UL symbols or F symbols. A SBFD-aware UE (which is a UE that may recognize SBFD symbols) may perform the random access on ROs configured in the SBFD symbols, thus reducing the access delay and lowering the probability of PRACH signal collision between different UEs in the CBRA.

An RO is a valid RO when satisfying certain conditions. Considering that there may be simultaneously SBFD-aware UEs and legacy UEs (which cannot recognize ROs configured in SBFD symbols) in a cell, when the ROs are configured in the SBFD symbols, a numbers of valid ROs usable by the SBFD-aware UEs may be different from a numbers of valid ROs usable by the legacy UEs.

A valid RO recognizable by the SBFD-aware UE is a new valid RO.

A valid RO recognizable by both the SBFD-aware UE and the legacy UE is a legacy valid RO.

A symbol where the new valid RO is located is a first SBFD symbol; a symbol where the legacy valid RO is located is a non-SBFD symbol or a second SBFD symbol.

A mapping relationship exists between an SSB and the valid RO. Based on the time-frequency position of the valid RO and the preamble sent by the UE, a base station may determine that an optimal beam at the base station side during beam pairing between the UE and the base station corresponds to SSB #m (SSB index or sequence number). In the following content of the disclosure, the expression "the optimal beam of the UE corresponds to SSB #m" is used to indicate that during beam pairing between the UE and the base station, the optimal beam at the base station side corresponds to SSB #m.

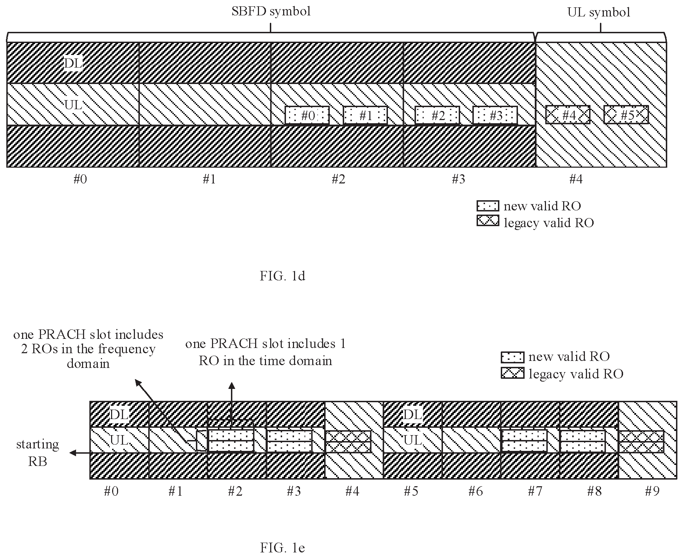

For example, FIG. 1d illustrates the following cases.

1. A total of 6 SSBs are mapped to valid ROs.

2. Within one PRACH configuration period,

for the SBFD-aware UE, there are 4 new valid ROs (RO #0 to RO #3) and 2 legacy valid ROs (RO #4, RO #5); when one SSB is mapped to one RO, RO #0 to RO #5 correspond to SSB #0 to SSB #5 respectively;

for the legacy UE, there are 2 legacy valid ROs (RO #4, RO #5); when one SSB is mapped to one RO, RO #4, corresponds to SSB #0, RO #5 corresponds to SSB#1.

3. For the SBFD-aware UE and the legacy UE, the SSBs associated with RO #4, RO #5 are different. When the SBFD-aware UE and the legacy UE simultaneously send preambles on the RO #4, the base station cannot determine whether the optimal beam of the SBFD-aware UE is SSB #4 or the optimal beam of the legacy UE is SSB #0.

The time-frequency position of a valid RO, the number of SSBs, and the mapping relationship between SSBs and valid ROs may be determined based on parameters configured by RRC.

1. The time-domain position of an RO is determined based on a parameter prach-ConfigurationIndex:

For example, prach-ConfigurationIndex INTEGER (0..255), it is determined based on the prach-ConfigurationIndex and table 6.3.3.2-2 in 38.211,

for example, prach-ConfigurationIndex = 154.

prach-ConfigurationIndex: 154 (which indicates a prach-ConfigurationIndex configured in RRC;

Preamble format: B4 (which indicates that preamble format B4 is used);

nf mod x = y: x=2, y=1 (which indicates that the PRACH configuration period of the RO is 2 frames (x=2), and the RO is located on an odd-numbered frame (y=1) within the 2 frames);

Subframe number: 2, 3, 4, 7, 8, 9. (which indicates that the RO is located in subframes 2, 3, 4, 7, 8, 9 within the odd-numbered frame);

Starting Symbol: 0 (which indicates that the starting symbol of the RO within a subframe is 0);

Number of PRACH slots within a subframe: 1 (which indicates that a number of PRACH slots within one subframe is 1, a length of the subframe is 1 ms, corresponding to a subcarrier spacing (SCS) of 15 kHz); in this case, the length of the PRACH slot is 1 ms, and the SCS is 15 kHz);

Number of time-domain PRACH occasions within a PRACH slot: 1 (which indicates that in the time domain, one PRACH slot includes one RO); and

PRACH duration: 12 (which indicates that the symbol length of one RO is 12 symbols).

2. The frequency-domain position of the RO is determined based on the following parameters:

msgl-FDM ENUMERATED {one, two, four, eight},

msgl-FrequencyStart INTEGER (0..maxNrofPhysicalResourceBlocks-1);

where msgl-FDM indicates the number of ROs in one PRACH slot in the frequency domain; and

msgl-FrequencyStart indicates a starting RB in the frequency domain.

For example, as shown in FIG. 1e,

an RO time-frequency configuration is illustrated.

The ROs are in subframes #2, 3, 4, 7, 8, 9.

In the time domain, one PRACH slot includes one RO. Within one subframe, the symbol range of the first RO is OS #0 to OS #11.

In the frequency domain, one PRACH slot includes two ROs.

After the time-frequency positions of ROs are determined, whether an RO is the valid RO is determined based on certain criteria. The manner of determining valid ROs is not limited in the embodiments.

In some embodiments, a valid RO index is determined based on a principle of frequency domain first and then time domain.

A mapping relationship between the SSB and the valid RO, a number of preambles included in the SSB and a preamble index included in the SSB are:

totalNumberOfRA-Preambles INTEGER (1..63),

where totalNumberOfRA-Preambles indicates the number N_total of preambles used for random access. If not configured, N_total = 64.

Example 1: when a plurality of SSBs are associated with one valid RO, the plurality of SSBs associated with valid RO #n are distinguished by a preamble. Based on the time-frequency positions of the valid RO and the preamble sent by the UE, the base station may determine that the optimal beam of the UE corresponds to SSB #m

ssb-perRACH-OccasionAndCB-PreamblesPerSSB CHOICE {four 16}.

- It indicates that N=4 SSBs are mapped to 1 valid RO, one SSB includes R=16 preambles, and a starting index of preambles for the n-th SSB in one valid RO is nN_total/N (i.e., n*R).
- For example, as shown in FIG. If,

  ■ there are 12 valid ROs in a PRACH configuration period.
  ■ There are a total of 20 SSBs, and N=4 SSBs are mapped to 1 valid RO,

    ♦ SSB #0 to SSB #3 are mapped to RO #0, SSB #4 to SSB #7 are mapped to RO #1, and SSB indices mapped to other ROs may be obtained in a similar way.
    ♦ One SSB includes R=16 preambles, and preamble indices corresponding to the 4 SSBs included in one RO are {0~15}, {16~31}, {32~47}, and {48~63} respectively.

  ■ The horizontal axis "time" in the figure represents the symbol where the valid RO is located, and does not represent continuous symbols in the time domain.

    ♦ For example, when associated with FIG. 1e,

      ➢ the time domain of RO #0 to RO #1 is OS #0 to OS #11 in slot #2;
      ➢ the time domain of RO #2 to RO #3 is OS #0 to OS #11 in slot #3;
      ➢ the time domain of RO #4 to RO #5 is OS #0 to OS #11 in slot #4.

Example 2: when one SSB is associated with one valid RO or a plurality of valid ROs, the UE sends a PRACH signal in valid RO #n associated with the optimal SSB #m, and the base station determines that the optimal beam of the UE corresponds to SSB #m based on the time-frequency positions of the valid RO.

ssb-perRACH-OccasionAndCB-PreamblesPerSSB CHOICE {onehalf n64}.

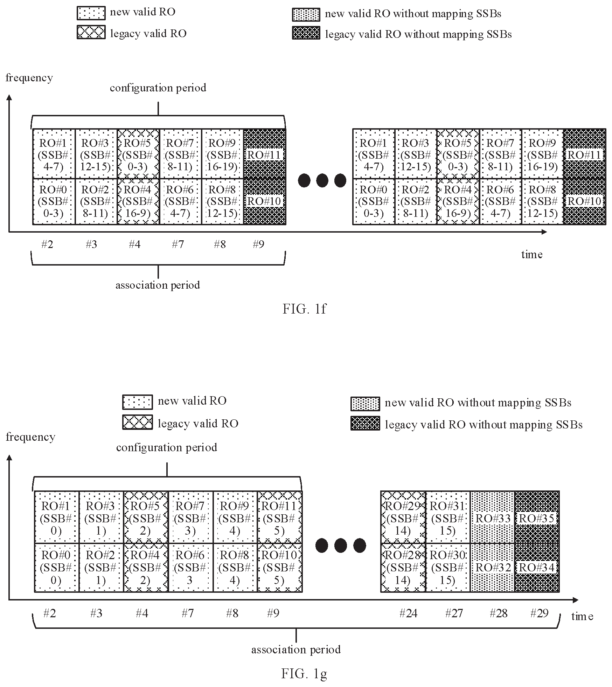

- It indicates that half (1/2) of an SSB is mapped to one valid RO, that is, one SSB is mapped to 2 valid ROs. One SSB includes 64 preambles, with preamble indices being 0 to 63.
- For example, as shown in FIG. 1g,

  ■ there are 12 valid ROs in a PRACH configuration period, and there are a total of 16 SSBs. One SSB is mapped to 2 valid ROs, and one SSB includes R=64 preambles.

SSB #0 is mapped to RO #0 to RO #1, SSB #2 is mapped to RO #2 to RO #3, and SSB indices mapped to other ROs may be obtained in a similar way.

In the above examples, it is possible that all SSBs cannot be mapped onto the valid ROs included in one PRACH configuration period. For example, as shown in FIG. 1g, there are a total of 16 SSBs ( $N_{TX}^{SSB} = 16$ ), and 6 SSBs may be mapped onto the valid ROs included in one PRACH configuration period. In this case, the 16 SSBs need to be mapped onto valid ROs in 3 PRACH configuration periods. Thus, an association period is defined in the protocol.

A length of the association period is N times the PRACH configuration period, in which N is a minimum value in a set corresponding to the PRACH configuration period in Table (1) that satisfies a condition 1.

- The condition 1 includes: within the association period, each SSB among the $N_{TX}^{SSB}$ SSBs being mapped to m different valid ROs at least once, where m is a positive integer, and may be determined based on ssb-perRACH-OccasionAndCB-PreamblesPerSSB.

Table 1

| PRACH configuration period (mesc) | association period (number of PRACH configuration periods) |
| --- | --- |
| 10 | {1, 2, 4, 8, 16} |
| 20 | {1, 2, 4, 8} |
| 40 | {1, 2, 4} |
| 80 | {1, 2} |
| 160 | {1} |

$N_{TX}^{SSB}$ indicates that the number of SSBs is obtained based on ssb-PositionsInBurst in SIB1 or the configuration in ServingCellConfigCommon.

In one cycle mapping, each SSB among the $N_{TX}^{SSB}$ SSBs is mapped to m different valid ROs once (i.e., for one time).

After M cycle mappings are performed within the association period, if the remaining ROs or preambles are insufficient for one cycle mapping, then no SSB is mapped to the remaining ROs or preambles.

Two examples of the association period are as follows.

- In FIG. 1f, the association period includes one PRACH configuration period, RO #10 to RO #11 are remaining after one cycle mapping, thus no SSB is mapped to RO #10 to RO #11.
- In FIG. 1g, the association period includes three PRACH configuration periods, RO #32 to RO #35 are remaining after one cycle mapping, thus no SSB is mapped to RO #32 to RO #35.
- The association pattern period includes N association periods, and a duration of the pattern enabling the mapping between SSBs and valid ROs does not exceed 160 ms, in which N is greater than or equal to 1.
- Within the duration of 160 ms, after an integer number of association periods, if the remaining valid ROs are insufficient for one cycle mapping, then no SSB is mapped to the remaining valid ROs, and the remaining valid ROs may not be used for the PRACH transmission.
- Among the N association periods, durations of different association periods may be different.

An example is as follows.

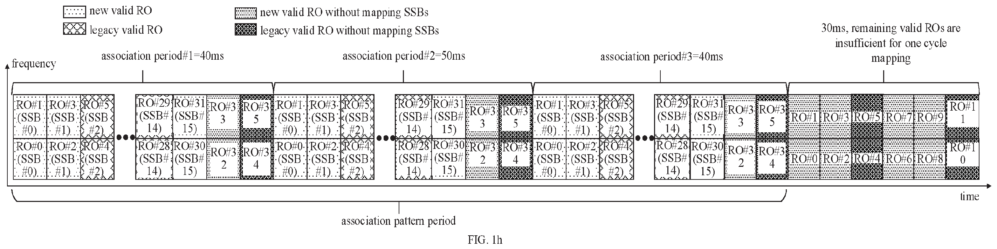

In FIG. 1h, a duration of association period #1 is 40 ms, a duration of association period #2 is 50 ms, and a duration of association period #3 is 40 ms. The remaining 30 ms within the 160 ms is insufficient for one cycle mapping,

N=3, and no SSB is mapped to the valid ROs within the last 30 ms.

Thus, there is a need to solve the following problem for the mapping between the SSBs and the valid ROs. When the ROs are configured in the SBFD symbols, and the number of valid ROs recognizable by the SBFD-aware UEs are different from the number of valid ROs recognizable by the legacy UEs, the problem is how to ensure that, under a certain SSB-valid RO mapping criterion, the mapping between the SSBs and the valid ROs may be achieved, and the base station may correctly identify the optimal beam of the SBFD-aware UE and the optimal beam of the legacy UE.

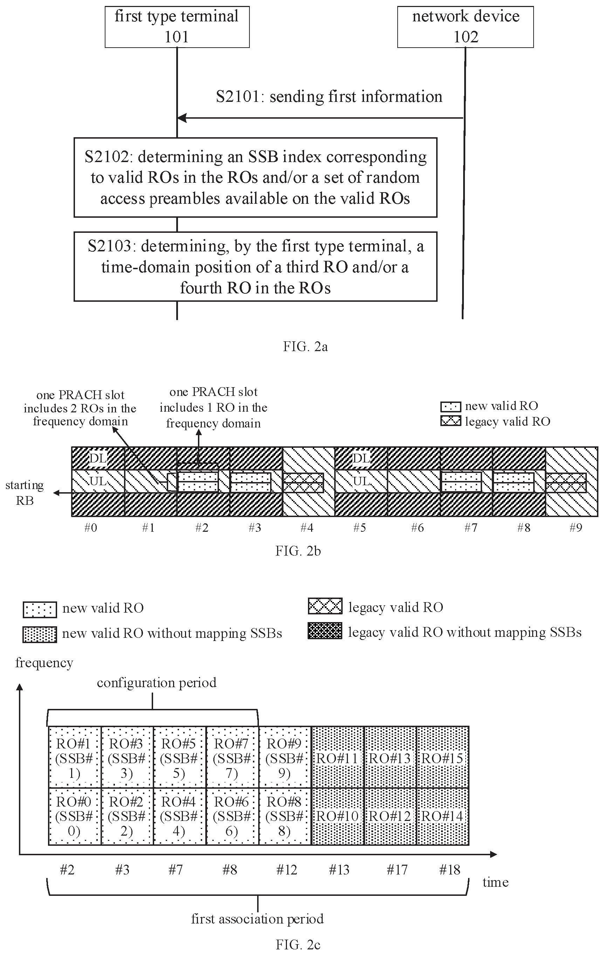

FIG. 2a is a flowchart illustrating a method for information transmission according to an embodiment. As shown in FIG. 2a, embodiments of the disclosure relate to a method for information transmission. The method is configured in a communication system 100. The method includes the following steps S2101 to S2103.

At step S2101, a network device sends first information.

In some embodiments, the network device sends the first information to a first type terminal.

In some embodiments, the first information includes an RO configuration.

In some embodiments, the RO configuration includes at least one of a time-domain position or a frequency-domain position of ROs.

In some embodiments, the first type terminal is a terminal capable of recognizing an SBFD symbol and a non-SBFD symbol.

In some embodiments, the first type terminal may perform UL transmission using UL SB resources of the SBFD symbol and/or perform DL transmission using DL SB resources of the SBFD symbol.

In some embodiments, on one SBFD symbol, the first type terminal may perform the UL transmission using the UL SB resources of the SBFD symbol or perform the DL transmission using the DL SB resources of the SBFD symbol.

In some embodiments, the first type terminal uses the UL SB resources or the DL SB resources on one SBFD symbol.

In some embodiments, on one SBFD symbol, the first type terminal may perform the UL transmission using the UL SB resources of the SBFD symbol and perform the DL transmission using the DL SB resources of the SBFD symbol.

In some embodiments, the first type terminal may simultaneously use the UL SB resources and the DL SB resources on one SBFD symbol.

In some embodiments, a second type terminal is a terminal capable of recognizing the non-SBFD symbol but incapable of recognizing the SBFD symbol.

In some embodiments, the second type terminal may receive the DL transmission using the DL symbols, or send the UL transmission using the UL symbols, or receive the DL transmission or send the UL transmission using F symbols.

In some embodiments, the non-SBFD symbol include at least one of: a UL symbol, a DL symbol, or an F symbol.

In some embodiments, the first type terminal determines a configuration of valid ROs among the ROs based on a predetermined rule. In the embodiments, the predetermined rule for determining the valid ROs is not limited.

In some embodiments, an RO time-domain configuration index is used to indicate the time-domain position of the RO.

In some embodiments, the configuration index may be prach-ConfigurationIndex.

In some embodiments, the first information further includes at least one of: a mapping relationship between the RO and an SSB index; a number of preambles corresponding to an SSB.

In some embodiments, the mapping relationship between the RO and the SSB index includes: a mapping relationship between a valid RO and a number of SSB indices.

In some embodiments, the mapping relationship between the valid RO and the number of SSB indices is used to indicate a number of SSB indices mapped to the valid RO.

In some embodiments, the first information may include a TDD UL-DL common configuration.

In some embodiments, the TDD UL-DL common configuration is used to configure a CC to use non-SBFD symbols.

In some embodiments, the non-SBFD symbol includes at least one of: a DL symbol; a UL symbol; or an F symbol.

In some embodiments, the TDD-UL-DL-ConfigCommon may indicate the TDD UL-DL common configuration.

In some embodiments, the TDD-UL-DL-ConfigCommon may be in a cell-level configuration.

In some embodiments, the first information does not include the TDD UL-DL common configuration.

In some embodiments, in a case that the first information does not include the TDD UL-DL common configuration, the CC may be configured to use F symbols.

In some embodiments, the first information may include: a semi-static SBFD configuration.

In some embodiments, the first information includes the TDD UL-DL common configuration and/or the semi-static SBFD configuration.

In some embodiments, the TDD UL-DL common configuration may configure the CC to use the non-SBFD symbols, and the semi-static SBFD configuration may configure the non-SBFD symbols as the SBFD symbols.

In some embodiments, the first information does not include the TDD UL-DL common configuration, and the semi-static SBFD configuration may configure the F symbol as the SBFD symbol.

In some embodiments, the SBFD symbols and the non-SBFD symbols may share the same RO configuration.

In some embodiments, the RO configuration may be applicable to the SBFD symbols and the non-SBFD symbols.

In some embodiments, the time-domain position of RO (e.g., prach-ConfigurationIndex) is applicable to the SBFD symbols and the non-SBFD symbols.

In some embodiments, the frequency-domain position of RO (e.g., msgl-FDM and/or msgl-FrequencyStart) is applicable to the SBFD symbols and the non-SBFD symbols.

In some embodiments, different RO configurations are adopted for the SBFD symbols and the non-SBFD symbols.

**In** some embodiments, the valid ROs include first ROs and second ROs.

In some embodiments, the valid ROs include: at least one first RO and at least one second RO.

In some embodiments, a symbol where the first RO is located is a first SBFD symbol, and a symbol where the second RO is located is a non-SBFD symbol or a second SBFD symbol.

In some embodiments, the first SBFD symbol is different from the second SBFD symbol.

In some embodiments, the first SBFD symbol includes: a symbol for which the network device configures a CC as DL via a first signaling and configures the symbol as an SBFD symbol via a second signaling.

In some embodiments, the second SBFD symbol includes: a symbol for which the network device configures a CC as F or UL via a first signaling and configures the symbol as an SBFD symbol via a second signaling.

In some embodiments, the first signaling includes: the TDD UL-DL common configuration.

In some embodiments, the second signaling includes: the semi-static SBFD configuration.

In some embodiments, frequency-domain resources of the first ROs are different from frequency-domain resources of the second ROs.

In some embodiments, time-domain resource indices associated with the first ROs are different from time-domain resource indices associated with the second ROs.

In some embodiments, a configuration associated with a mapping relationship between the first ROs and the SSB indices is different from a configuration associated with a mapping relationship between the second ROs and the SSB indices.

In some embodiments, the first type terminal and the second type terminal share the same understanding of a frequency-domain range of an RO in an F symbol configured by the TDD UL-DL common configuration.

In some embodiments, the first type terminal and the second type terminal share the same understanding of a time-domain range of an RO in an F symbol configured by the TDD UL-DL common configuration.

In some embodiments, the first information includes at least one of:

frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

In some embodiments, the frequency-domain resources of the first ROs, the time-domain resource indices associated with the first ROs, and/or the configuration associated with the mapping relationship between the first ROs and the SSB indices are applicable to the first SBFD symbol.

In some embodiments, the frequency-domain resources of the second ROs, the time-domain resource indices associated with the second ROs, and/or the configuration associated with the mapping relationship between the second ROs and the SSB indices are applicable to the non-SBFD symbol.

In some embodiments, the frequency-domain resources of the second ROs, the time-domain resource indices associated with the second ROs, and/or the configuration associated with the mapping relationship between the second ROs and the SSB indices are applicable to the second SBFD symbol.

In some embodiments, the first information includes: first sub-information and second sub-information.

The first sub-information includes at least one of: the frequency-domain resources of the first ROs; the time-domain resource indices associated with the first ROs; or the configuration associated with the mapping relationship between the first ROs and the SSB indices.

The second sub-information includes at least one of: the frequency-domain resources of the second ROs; the time-domain resource indices associated with the second ROs; or the configuration associated with the mapping relationship between the second ROs and the SSB indices.

At step S2102, the first type terminal determines an SSB index corresponding to valid ROs in the ROs and/or a set of random access preambles available on the valid ROs.

In some embodiments, the first type terminal determines, based on the RO configuration, the SSB index corresponding to the valid ROs in the ROs and/or the set of random access preambles available on the valid ROs.

In some embodiments, determining the SSB index corresponding to the valid ROs in the ROs includes: mapping SSB indices to the valid ROs.

In some embodiments, for the same second RO, an SSB index mapped by the second type terminal may be the same as an SSB index mapped by the first type terminal.

In some embodiments, for the same second RO, the SSB index mapped by the second type terminal may be different from the SSB index mapped by the first type terminal.

In some embodiments, the SSB index mapped by the first type terminal may be different from the SSB index mapped by the second type terminal.

In some embodiments, the first type terminal does not map the SSB index to the second RO.

In some embodiments, the second type terminal does not map the SSB index to the first RO.

In some embodiments, the first type terminal and the second type terminal use the same set of random access preambles within the same first RO.

In some embodiments, the first type terminal and the second type terminal use different sets of random access preambles within the same first RO.

In some embodiments, the RO configuration is configured for the second type terminal to determine at least one SSB index corresponding to each of the second ROs in one cycle mapping.

In some embodiments, within one association period, the second type terminal performs i cycle mappings of N SSB indices, in which i is a positive integer.

In some embodiments, in one cycle mapping, each SSB index among the N SSB indices is mapped to j different second ROs, in which j is a positive integer; and the N SSB indices are all SSB indices configured by the network device.

In some embodiments, within one association period, the first type terminal performs k cycle mappings of the N SSB indices, in which k is a positive integer.

In some embodiments, in one cycle mapping, each SSB index among the N SSB indices is mapped to m different valid ROs, in which m is a positive integer.

In some embodiments, the N SSB indices are all SSB indices configured by the network device.

In some embodiments, one cycle mapping includes performing one mapping operation for each valid RO that needs to be mapped.

In some embodiments, in one cycle mapping, each SSB index among the N SSB indices is mapped to m different valid ROs at least once.

In some embodiments, the valid ROs to which different SSB indices are mapped may be the same or different.

As shown in FIG. 1g, N is 6, m is 2, and each SSB index among the 6 SSB indices is mapped to 2 valid ROs.

In the embodiments, the total number of SSB indices configured by the network device is denoted by N or $N_{TX}^{SSB}$.

In some embodiments, the first type terminal maps the SSB indices to the valid ROs based on a first manner. The first manner includes at least one of:

mapping the SSB indices in ascending order to a plurality of valid ROs with the same time domain position, the plurality of valid ROs being in an ascending order of frequency domain positions; or

mapping the SSB indices in ascending order to a plurality of valid ROs with different time-domain positions, the plurality of valid ROs being in an order from front to back of time-domain positions.

In some embodiments, in a case that a time-domain position of a first valid RO is before a time-domain position of a second valid RO, an SSB index with a smaller value is mapped to the first valid RO, and an SSB index with a larger value is mapped to the second valid RO.

In some embodiments, in a case that the time-domain position of the first valid RO is the same as the time-domain position of the second valid RO, and a maximum frequency in a frequency-domain range of the first valid RO is less than or equal to a minimum frequency in a frequency-domain range of the second valid RO, the SSB indices are mapped in ascending order to the first valid RO and the second valid RO sequentially.

In some embodiments, determining, based on the RO configuration, the SSB index corresponding to the valid ROs in the ROs includes:

determining at least one SSB index corresponding to each of the first ROs in one cycle mapping.

In some embodiments, the first type terminal determines the at least one SSB index corresponding to the first RO, and the first type terminal does not determine the SSB index for the second RO.

In some embodiments, the first type terminal maps the SSB index to the first RO and does not use the second RO.

In some embodiments, not using the second RO includes at least one of: not mapping the SSB index to the second RO; not monitoring the second RO; or not recognizing/determining the second RO.

In some embodiments, the second type terminal determines the at least one SSB index corresponding to the second RO, and the second type terminal does not determine the SSB index for the first RO.

In some embodiments, the second type terminal maps the SSB index to the second RO and does not use the first RO.

In some embodiments, not using the first RO includes at least one of: not mapping the SSB index to the first RO; not monitoring the first RO; or not recognizing the first RO.

In some embodiments, in one cycle mapping, the first type terminal maps each SSB index among N SSB indices to m different first ROs,

in which the N SSB indices are not mapped to the second ROs; and

m is a positive integer, and the N SSB indices are all SSB indices configured by the network device.

In some embodiments, the first type terminal determines a first association period i and the second type terminal determines a second association period j, in which i is less than or equal to I, I is a total number of first association periods; j is less than or equal to J, and J is a total number of second association periods.

In some embodiments, within the first association period i, each SSB among $N_{TX}^{SSB}$ SSBs is mapped to m different first ROs at least once.

In some embodiments, within the second association period j, each SSB among $N_{TX}^{SSB}$ SSBs is mapped to m different second ROs at least once.

In some embodiments, the first type terminal determines a first association pattern period and the second type terminal determines a second association pattern period.

In some embodiments, the first association pattern period includes at least one first association period.

In some embodiments, the second association pattern period includes at least one second association period.

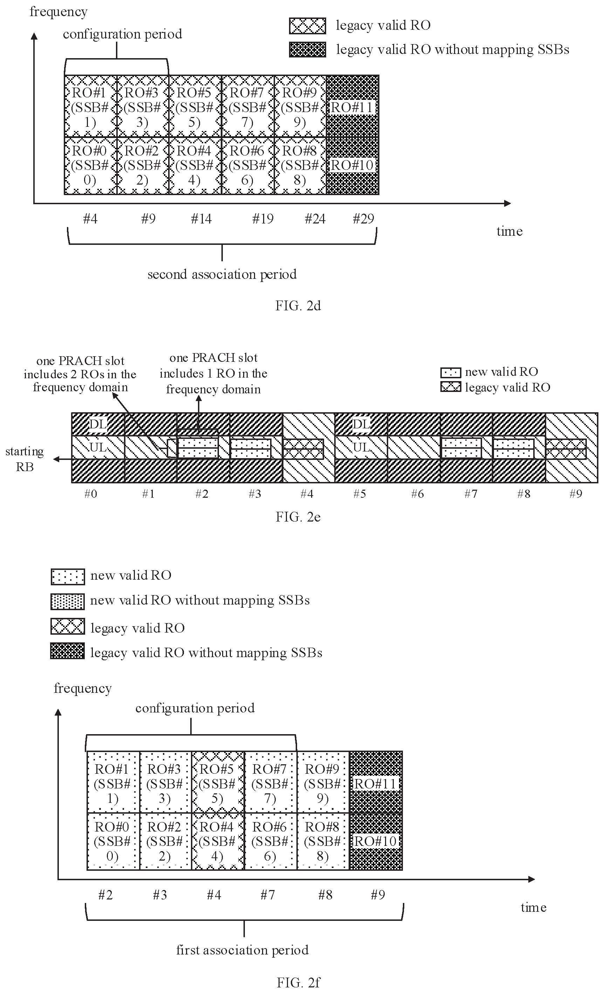

For example, as shown in FIG. 2b, FIG. 2c, and FIG. 2d, $N_{TX}^{SSB} = 10$ , sb-perRACH-OccasionAndCB-PreamblesPerSSB CHOICE {one n64}, that is, one SSB is mapped to one valid RO. The PRACH configuration period has 10 slots. Within one PRACH configuration period, there are 8 first ROs and 4 second ROs. In this case, the first association period includes 2 PRACH configuration periods, and no SSB index is mapped to the last 6 first ROs. The second association period includes 3 PRACH configuration periods, and no SSB index is mapped to the last 2 second ROs.

In some embodiments, the first type terminal determines at least one first SSB index corresponding to each of the first ROs, and at least one second SSB index corresponding to each of the second ROs.

In some embodiments, the first type terminal determines at least one first SSB index corresponding to each of the first ROs, and at least one second SSB index corresponding to each of the second ROs. That is, the first type terminal maps the SSB indices to the first ROs and the second ROs.

In some embodiments, the second type terminal determines at least one third SSB index corresponding to each of the second ROs, and the second type terminal does not determine the SSB indices for the first ROs.

In some embodiments, the second type terminal maps the SSB indices to the second ROs and does not use the first RO.

In some embodiments, the at least one second SSB index corresponding to each of the second ROs determined by the first type terminal is the same as or different from the at least one third SSB index corresponding to each of the second ROs determined by the second type terminal.

In some embodiments, the first type terminal uses a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In some embodiments, the first type terminal selects a first random access preamble from the first set of random access preambles on the second ROs.

**In** some embodiments, the second type terminal selects a second random access preamble from the second set of random access preambles on the second ROs.

In some embodiments, the first set of random access preambles is different from the second set of random access preambles.

In some embodiments, the first set of random access preambles is not intersected with a second set of random access preambles.

In some embodiments, in a case that a random access preamble received by an access network device on the second RO is the first random access preamble, the access network device determines that the first type terminal is performing random access on the second RO.

In some embodiments, in a case that a random access preamble received by an access network device on the second RO is the second random access preamble, the access network device determines that the second type terminal is performing random access on the second RO.

In some embodiments, the first type terminal determines a first association period i and the second type terminal determines a second association period j, in which i is less than or equal to I, I is a total number of first association periods; j is less than or equal to J, and J is a total number of second association periods.

In some embodiments, within the first association period i, each SSB among $N_{TX}^{SSB}$ SSBs is mapped to m different ROs at least once, in which the valid ROs are the first ROs or the second ROs.

In some embodiments, within the second association period j, each SSB among $N_{TX}^{SSB}$ SSBs is mapped to m different second ROs at least once.

In some embodiments, the first type terminal determines a first association pattern period and the second type terminal determines a second association pattern period.

In some embodiments, the first association pattern period includes at least one first association period.

In some embodiments, the second association pattern period includes at least one second association period.

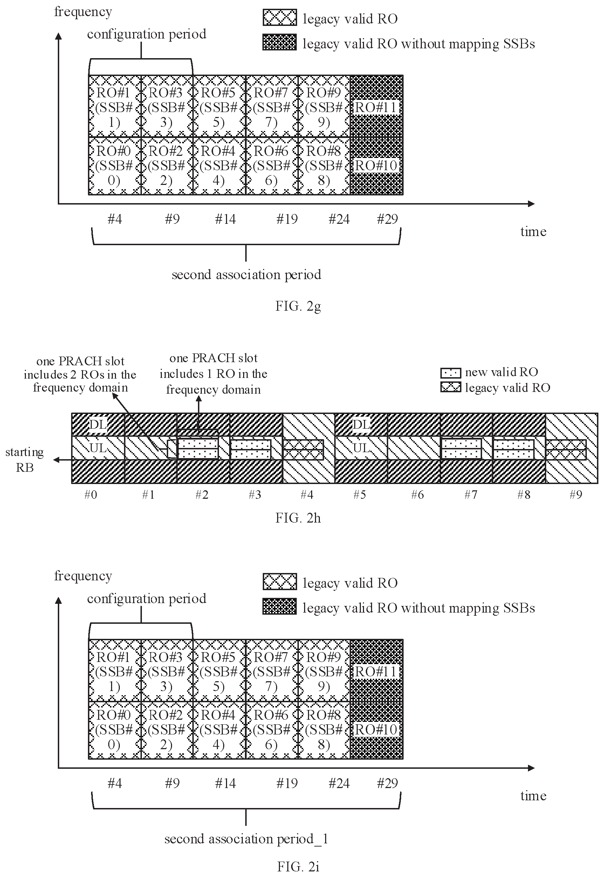

For example, as shown in FIG. 2e, FIG. 2f, and FIG. 2g, $N_{TX}^{SSB} = 10$ , ssb-perRACH-OccasionAndCB-PreamblesPerSSB CHOICE {one n64}, that is, one SSB is mapped to one valid RO. The PRACH configuration period has 10 slots. Within one PRACH configuration period, there are 8 first ROs and 4 second ROs. The specific mapping includes:

the first association period including one PRACH configuration period, and no SSB being mapped to the last 2 second ROs; and

the second association period including three PRACH configuration periods, and no SSB being mapped to the last 2 second ROs.

When the SSB is mapped to a second RO,

for the first type terminal, in slot #4, SSB #4 is mapped to RO #4 and SSB #5 is mapped to RO 5; RO #10 and RO # 11 in slot #9 are remaining ROs after one cycle mapping, and no SSB is mapped to RO #10 and RO # 11;
for the second type terminal, in slot #4 of the first PRACH configuration period, SSB #0 is mapped to RO #0 and SSB #1 is mapped to RO #1; in slot #9, SSB #2 is mapped to RO #2 and SSB #3 is mapped to RO #3.

The first type terminal and the second type terminal have different SSBs mapped to the ROs in slot #4. The first type terminal and the second type terminal are distinguished by preambles. For example, a first random access preamble from a first set of random access preambles {0~31} is used for the first type terminal. A second random access preamble from a second set of random access preambles {32~63} is used for the second type terminal. Thus, access preambles sent by different types of terminals are distinguished.

In some embodiments, the at least one second SSB index corresponding to each of the second ROs is the same as at least one third SSB index adopted by the second type terminal for each of the second ROs.

In some embodiments, the first type terminal determines at least one first SSB index corresponding to each of the first ROs, and at least one second SSB index corresponding to each of the second ROs. That is, the first type terminal maps the SSB indices to the first ROs and the second ROs.

In some embodiments, the second type terminal determines at least one third SSB index corresponding to each of the second ROs, and the second type terminal does not determine the SSB indices for the first ROs.

In some embodiments, the second type terminal maps the SSB indices to the second ROs and does not use the first RO.

In some embodiments, the at least one second SSB index corresponding to each of the second ROs determined by the first type terminal is the same as or different from the at least one third SSB index corresponding to each of the second ROs determined by the second type terminal.

In some embodiments, the first type terminal determines the at least one third SSB index adopted by the second type terminal for each of the second ROs, and maps the second ROs using the third SSB indices.

In some embodiments, the first type terminal determines the at least one third SSB index adopted by the second type terminal for each of the second ROs; forms a third set of SSB indices including all the third SSB indices, in which the first SSB index is a remaining SSB index among N SSB indices after removing the third set of SSB indices, and the N SSB indices are all SSB indices configured by the network device.

In some embodiments, the first type terminal determines the at least one third SSB index adopted for each of the second ROs in the same way as the second type terminal determines the third SSB indices.

In some embodiments, the first type terminal maps the first SSB indices, which are remaining SSB indices among the N SSB indices after removing the third set of SSB indices formed by all the third SSB indices, to the first ROs.

In some embodiments, the first type terminal maps the second ROs using the determined third SSB indices.

In some embodiments, the first type terminal maps the first SSB indices to the first ROs using the first manner.

In some embodiments, the second type terminal maps the N SSB indices to the second ROs using the first manner.

For example, the first type terminal determines a first association period i and the second type terminal determines a second association period j, in which i is less than or equal to I, I is a total number of first association periods; j is less than or equal to J, and J is a total number of second association periods.

Within the second association period j, each SSB among $N_{TX}^{SSB}$ SSBs is mapped to m different second ROs at least once based on the first manner.

Within the first association period i, each SSB among $N_{TX}^{SSB}$ SSBs is mapped to m different valid ROs at least once, in which the valid ROs are the first ROs or the second ROs.

The first association period is an integer multiple of an SBFD slot format configuration period.

The first type terminal determines a second RO set #1 within the first association period that needs to be mapped with SSBs. Within the second association period j, the second type terminal maps an SSB set #1 to the second RO set #1.

Within the first association period i, the first type terminal maps SSBs of an SSB set #2 to the first ROs based on the first manner, and maps SSBs of the SSB set #1 to the second ROs based on the first manner, in which the SSB set #2 is a complement of the SSB set #1 in an SSB set #0.

In some embodiments, the first type terminal determines a first association pattern period and the second type terminal determines a second association pattern period.

In some embodiments, the first association pattern period includes at least one first association period.

In some embodiments, the second association pattern period includes at least one second association period.

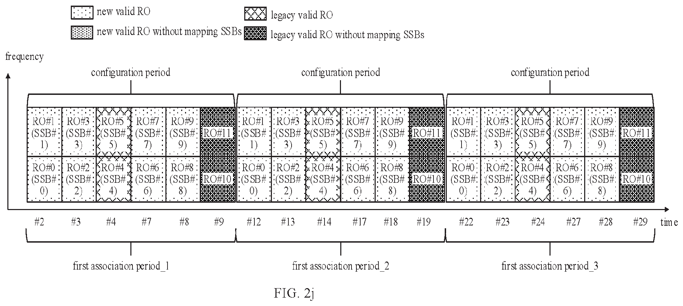

For example, as shown in FIG. 2h, FIG. 2i, and FIG. 2j, $N_{TX}^{SSB} = 10$ , ssb-perRACH-OccasionAndCB-PreamblesPerSSB CHOICE {one n64}, that is, one SSB is mapped to one valid RO. The PRACH configuration period has 10 slots. Within one PRACH configuration period, there are 8 first ROs and 4 second ROs. The specific mapping includes:

- a second association period _1 including three PRACH configuration periods, and no SSB being mapped to the last 2 second ROs; and
- the first association period including one PRACH configuration period, and no SSB being mapped to the last 2 second ROs.

■ For a first association period _1,

♦ a second RO set #1 (the second ROs in slot #4) within the first association period _1 that needs to be mapped with SSBs is determined. In the second association period _1, an SSB set #1 (SSB #0, SSB #1) is mapped to the second RO set #1.

♦ Within the first association period _1, SSBs of an SSB set #2 (SSB #2, 3, 4, 5, 6, 7, 8, 9) are mapped to the first ROs based on the first manner, in which the SSB set #2 is a complement of the SSB set #1 in an SSB set #0.

■ For a first association period _2,

a second RO set #1 (the second ROs in slot #14) within the first association period _2 that needs to be mapped with SSBs is determined. In the second association period _1, an SSB set #1 (SSB #4, 5) is mapped to the second RO set #1.

♦ Within the first association period _1, SSBs of an SSB set #2 (SSB #0, 1, 2, 3, 6, 7, 8, 9) are mapped to the first ROs based on the first manner, in which the SSB set #2 is a complement of the SSB set #1 in an SSB set #0.

■ For a first association period _3,

♦ a second RO set #1 (the second ROs in slot #24) within the first association period _3 that needs to be mapped with SSBs is determined. In the second association period _1, an SSB set #1 (SSB #8, 9) is mapped to the second RO set #1.

♦ Within the first association period _1, SSBs of an SSB set #2 (SSB #0, 1, 2, 3, 4, 5, 6, 7) are mapped to the first ROs based on the first manner, in which the SSB set #2 is a complement of the SSB set #1 in an SSB set #0.

In some embodiments, if the valid ROs include at least one first RO and do not include the second ROs, the second type terminal does not map the SSB indices to the first ROs.

In some embodiments, if the valid ROs include at least one second RO and do not include the first ROs, the first type terminal and the second type terminal map the SSB indices to the second ROs using the same mapping rule.

In some embodiments, if the valid ROs include at least one second RO and do not include the first ROs, for the same second RO, the SSB index mapped by the second type terminal may be the same as the SSB index mapped by the first type terminal.

In some embodiments, since the second type terminal does not support the SBFD symbols, the second type terminal does not map an SSB index to the first RO.

In some embodiments, the term "information" may be interchanged with the terms such as "message", "signal", "signaling", "report", "configuration", "indication", "instruction", "command", "channel", "parameter", "field", "data", etc.

In some embodiments, the term "send" may be interchanged with the terms such as "transmit", "report", "transfer", etc.

The method for information transmission in the embodiments of the disclosure may include at least one of the step S2101 to the step S2102. For example, the step S2101 may be implemented as an independent embodiment, and the step S2102 may be implemented as an independent embodiment.

For example, the step S2101 and the step S2102 may be implemented as an independent embodiment. For example, the step S2101 may be implemented as an independent embodiment, and the step S2102 may be implemented as an independent embodiment, which is not limited herein.

In some embodiments, referring to FIG. 2a, the steps in FIG. 2a may further include the step S2103.

At step S2103, the first type terminal determines a time-domain position of a third RO and/or a fourth RO in the ROs.

In some embodiments, the first information includes PRACH configuration information configured for the first type terminal.

In some embodiments, the time-domain position of the third RO in the ROs is determined based on the PRACH configuration information.

In some embodiments, time-domain positions of the third RO and the fourth RO in the ROs are determined based on the PRACH configuration information.

In some embodiments, the time-domain position of the third RO is determined based on a PRACH configuration index (prach-ConfigurationIndex) indicated by the PRACH configuration information and a first predetermined mapping relationship.

In some embodiments, the time-domain positions of the third RO and the fourth RO are determined based on the prach-ConfigurationIndex indicated by the PRACH configuration information and the first predetermined mapping relationship.

In some embodiments, a symbol where the third RO is located includes a third SBFD symbol, a symbol where the fourth RO is located does not include a third SBFD symbol, and the third SBFD symbol is one of:

a symbol for which a network device configures a CC as DL via a first signaling and configures the symbol as an SBFD symbol via a second signaling; or
a symbol for which a network device configures a CC as DL or F via a first signaling and configures the symbol as an SBFD symbol via a second signaling.

In some embodiments, the first type terminal determines the first predetermined mapping relationship.

In some embodiments, determining the first predetermined mapping relationship includes one of:

determining the first predetermined mapping relationship based on communication protocol rule information;
determining the first predetermined mapping relationship based on higher layer configuration information; or
determining the first predetermined mapping relationship based on indication information dynamically sent by the network device.

In some embodiments, the first predetermined mapping relationship is determined based on a type of a FR where the third RO and/or the fourth RO is located,
in which the FR is a FR1 or a FR2.

In some embodiments, it is determined that the third RO and/or the fourth RO is located in the FR1, and the first predetermined mapping relationship is one of:

a second predetermined mapping relationship, in which the second predetermined mapping relationship is used for random access configuration of a paired spectrum or a supplementary UL in the FR1;
a third predetermined mapping relationship, in which the third predetermined mapping relationship is used for random access configuration of an unpaired spectrum in the FR1; or
a fourth predetermined mapping relationship, in which the fourth predetermined mapping relationship is used for random access configuration of an unpaired spectrum in the FR1 for the first type terminal.

In some embodiments, it is determined that the third RO and/or the fourth RO is located in the FR2, and the first predetermined mapping relationship is one of:

a fifth predetermined mapping relationship, in which the fifth predetermined mapping relationship is used for random access configuration of an unpaired spectrum in the FR2; or
a sixth predetermined mapping relationship, in which the sixth predetermined mapping relationship is used for random access configuration of an unpaired spectrum in the FR2 for the first type terminal.

In some embodiments, the second predetermined mapping relationship, the third predetermined mapping relationship, the fourth predetermined mapping relationship, the fifth predetermined mapping relationship and/or the sixth predetermined mapping relationship is a mapping relationship determined based on protocol rule information.

In some embodiments, the second predetermined mapping relationship may be used for the first type terminal and/or the second type terminal.

In some embodiments, the third predetermined mapping relationship may be used for the first type terminal and/or the second type terminal.

In some embodiments, the fifth predetermined mapping relationship may be used for the first type terminal and/or the second type terminal.

It should be noted that the step S2103 may be implemented as an independent embodiment, or may be implemented in combination with at least one of the steps S2101 to S2102. The order of different steps may be exchanged for implementation without contradiction, which is not limited herein.

For better understanding of the technical solution of the step S2103, the following explanation is provided via some exemplary embodiments.

In some embodiments, a time-domain position of a fifth RO (corresponding to the third RO and/or the fourth RO in the disclosure) is determined based on the prach-ConfigurationIndex configured for the SBFD-aware UE in the first information and a first predefined table (corresponding to the first predetermined mapping relationship in the disclosure).

In some embodiments, the fifth RO is the third RO, and/or the fifth RO is the third RO and the fourth RO. The symbol where the third RO is located includes the third SBFD symbol, the symbol where the fourth RO is located does not include the third SBFD symbol, and the third SBFD symbol is one of:

the symbol for which the network device configures the CC as DL via the first signaling and configures the symbol as the SBFD symbol via the second signaling; or

the symbol for which the network device configures the CC as DL or F via the first signaling and configures the symbol as the SBFD symbol via the second signaling.

In some embodiments, when the fifth RO is in the FR1, the first predefined table is a second predefined table (corresponding to the second predetermined mapping relationship), a third predefined table (corresponding to the third predetermined mapping relationship), or a fourth predefined table (corresponding to the fourth predetermined mapping relationship) in the protocol.

In some embodiments, the second predefined table is a predefined table for random access configuration of paired spectrum/supplementary UL in FR1 (i.e., FR1 and paired spectrum/supplementary UL).

In some embodiments, the third predefined table is a predefined table for random access configuration of unpaired spectrum in FR1 (i.e., FR1 and unpaired spectrum).

In some embodiments, the fourth predefined table is a newly added predefined table in the protocol for random access configuration of FR1 and unpaired spectrum for the SBFD-aware UEs.

For example, the second predefined table is Table 6.3.3.2-2 in 3GPP TS 38.211.

For example, the third predefined table is Table 6.3.3.2-3 in 3GPP TS 38.211.

For example, the fourth predefined table is a newly added table in 3GPP TS 38.211 for random access configuration of FR1 and unpaired spectrum for the SBFD-aware UEs.

In some embodiments, it is determined, based on protocol default, higher layer configuration, or dynamic indication, that the first predefined table is the second predefined table, the third predefined table, or the fourth predefined table.

In some embodiments, when the fifth RO is in the FR2, the first predefined table is a fifth predefined table or a sixth predefined table.

In some embodiments, the fifth predefined table is a predefined table for random access configuration of unpaired spectrum in FR2 (i.e., FR2 and unpaired spectrum).

In some embodiments, the sixth predefined table is a newly added predefined table in the protocol for random access configuration of FR2 and unpaired spectrum for the SBFD-aware UEs.

In some embodiments, the fifth predefined table (corresponding to the fifth predetermined mapping relationship in the disclosure) is Table 6.3.3.2-4 in 3GPP TS 38.211.

In some embodiments, the sixth predefined table (corresponding to the sixth predetermined mapping relationship in the disclosure) is a newly added table in 3GPP TS 38.211 for random access configuration of FR2 and unpaired spectrum for the SBFD-aware UEs.

In some embodiments, it is determined, based on protocol default, higher layer configuration, or dynamic indication, that the first predefined table is the fifth predefined table or the sixth predefined table.

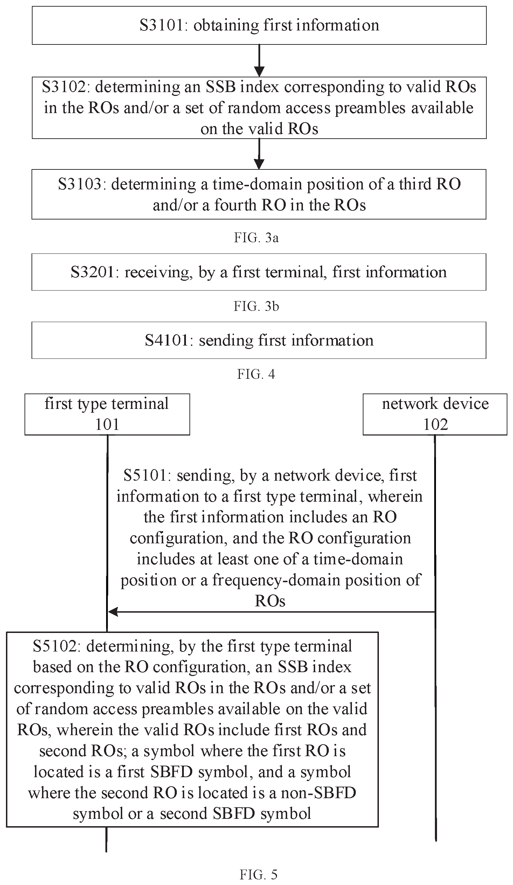

FIG. 3a is a flowchart illustrating a method for information transmission according to an embodiment. As shown in FIG. 3a, embodiments of the disclosure relate to a method for information transmission. The method is performed by a first type terminal 101 and includes the following steps S3101 to S3103.

At step S3101, first information is obtained.

In some embodiments, optional implementations of the step S3101 may be found in optional implementations of the step S2101 in FIG. 2a and other related parts in the embodiments associated with FIG. 2a, which are not repeated herein.

In some embodiments, the terminal receives the first information sent by a network device, but it is not limited herein; the terminal may also receive the first information sent by other entities.

In some embodiments, the terminal obtains the first information specified by a protocol.

In some embodiments, the terminal obtains the first information from an upper layer(s).

In some embodiments, the terminal obtains the first information by information processing.

In some embodiments, the step S3101 is omitted, and the terminal autonomously implements the functions indicated by the first information, or the above functions are default or preconfigured.

At step S3102, an SSB index corresponding to valid ROs in the ROs and/or a set of random access preambles available on the valid ROs are determined.

In some embodiments, optional implementations of the step S3102 may be found in optional implementations of the step S2102 in FIG. 2a and other related parts in the embodiments associated with FIG. 2a, which are not repeated herein.

The method for information transmission in the embodiments of the disclosure may include at least one of the step S3101 to the step S3102. For example, the step S3101 may be implemented as an independent embodiment, and the step S3102 may be implemented as an independent embodiment.

In some embodiments, referring to FIG. 3a, the steps in FIG. 3a may further include the step S3103.

At step S3103, a time-domain position of a third RO and/or a fourth RO in the ROs is determined.

It should be noted that the step S3103 may be implemented independently or in combination with at least one of the steps S3101 to S3102. The order of different steps may be exchanged without conflict, which is not limited herein.

FIG. 3b is a flowchart illustrating a method for information transmission according to an embodiment. As shown in FIG. 3b, embodiments of the disclosure relate to a method for information transmission. The method is performed by a first type terminal 101 and includes the following step S3201.

At step S3201, the first type terminal receives first information.

In some embodiments, the first information includes an RO configuration, and the RO configuration includes at least one of a time-domain position or a frequency-domain position of ROs.

In some embodiments, the first type terminal determines, based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol.

In some embodiments, the first type terminal supports the first ROs and the second ROs.

In some embodiments, determining, based on the RO configuration, the SSB index corresponding to the valid ROs in the ROs includes:
determining at least one SSB index corresponding to each of the first ROs in one cycle mapping.

In some embodiments, determining, based on the RO configuration, the SSB index corresponding to the valid ROs in the ROs includes:

in one cycle mapping, mapping each SSB index among N SSB indices to m different first ROs,
in which the N SSB indices are not mapped to the second ROs; and
m is a positive integer, and the N SSB indices are all SSB indices configured by a network device.

In some embodiments, determining, based on the RO configuration, the SSB index corresponding to the valid ROs in the ROs includes: determining at least one first SSB index corresponding to each of the first ROs, and at least one second SSB index corresponding to each of the second ROs.

In some embodiments, determining the set of random access preambles available on the valid ROs includes: using a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In some embodiments, the at least one second SSB index corresponding to each of the second ROs is the same as at least one third SSB index adopted by a second type terminal for each of the second ROs.

In some embodiments, determining the at least one first SSB index corresponding to each of the first ROs, and the at least one second SSB index corresponding to each of the second ROs includes:

determining the at least one third SSB index adopted by the second type terminal for each of the second ROs; and
forming a third set of SSB indices including all the third SSB indices, in which the first SSB index is a remaining SSB index among N SSB indices after removing the third set of SSB indices, and the N SSB indices are all SSB indices configured by a network device.

In some embodiments, determining the SSB index corresponding to the valid ROs in the ROs includes:

performing k cycle mappings of N SSB indices within one association period, in which k is a positive integer; and in one cycle mapping, mapping each SSB index among the N SSB indices to m different valid ROs, in which m is a positive integer; and the N SSB indices are all SSB indices configured by a network device.

In some embodiments, determining the SSB index corresponding to the valid ROs in the ROs includes: mapping the SSB indices to the valid ROs based on a first manner, in which the first manner includes at least one of:

mapping the SSB indices in ascending order to a plurality of valid ROs with the same time domain position, the plurality of valid ROs being in an ascending order of frequency domain positions; or

mapping the SSB indices in ascending order to a plurality of valid ROs with different time-domain positions, the plurality of valid ROs being in an order from front to back of time-domain positions.

In some embodiments, the first information includes at least one of: frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

In some embodiments, the first SBFD symbol includes: a symbol for which the network device configures a CC as DL via a first signaling and configures the symbol as an SBFD symbol via a second signaling; and the second SBFD symbol includes: a symbol for which the network device configures the CC as F or UL via a first signaling and configures the symbol as an SBFD symbol via a second signaling.

In some embodiments, the first signaling includes: a TDD UL-DL common configuration; and the second signaling includes: a semi-static SBFD configuration.

In some embodiments, the first information includes PRACH configuration information for the first type terminal; and the method further includes at least one of:

determining a time-domain position of a third RO in the ROs based on the PRACH configuration information; or determining time-domain positions of a third RO and a fourth RO in the ROs based on the PRACH configuration information.

In some embodiments, determining the time-domain position of the third RO in the ROs based on the PRACH configuration information includes: determining the time-domain position of the third RO based on a PRACH configuration index (prach-ConfigurationIndex) indicated by the PRACH configuration information and a first predetermined mapping relationship; and/or determining the time-domain positions of the third RO and the fourth RO in the ROs based on the PRACH configuration information includes: determining the time-domain positions of the third RO and the fourth RO based on the prach-ConfigurationIndex indicated by the PRACH configuration information and a first predetermined mapping relationship.

In some embodiments, a symbol where the third RO is located includes a third SBFD symbol, a symbol where the fourth RO is located does not include a third SBFD symbol, and the third SBFD symbol is one of:

a symbol for which a network device configures a CC as DL via a first signaling and configures the symbol as an SBFD symbol via a second signaling; or a symbol for which a network device configures a CC as DL or F via a first signaling and configures the symbol as an SBFD symbol via a second signaling.

In some embodiments, the method further includes: determining the first predetermined mapping relationship.

In some embodiments, determining the first predetermined mapping relationship includes one of:

determining the first predetermined mapping relationship based on communication protocol rule information; determining the first predetermined mapping relationship based on higher layer configuration information; or determining the first predetermined mapping relationship based on indication information dynamically sent by the network device.

In some embodiments, determining the first predetermined mapping relationship includes:

determining the first predetermined mapping relationship based on a type of a FR where the third RO and/or the fourth RO is located,
in which the FR is a FR1 or a FR2.

In some embodiments, determining the first predetermined mapping relationship based on the type of the FR where the third RO and/or the fourth RO is located includes:
determining that the third RO and/or the fourth RO is located in the FR1, and the first predetermined mapping relationship is one of:

a second predetermined mapping relationship, in which the second predetermined mapping relationship is used for random access configuration of a paired spectrum or a supplementary UL in the FR1;
a third predetermined mapping relationship, in which the third predetermined mapping relationship is used for random access configuration of an unpaired spectrum in the FR1; or
a fourth predetermined mapping relationship, in which the fourth predetermined mapping relationship is used for random access configuration of an unpaired spectrum in the FR1 for the first type terminal.

In some embodiments, determining the first predetermined mapping relationship based on the type of the FR where the third RO and/or the fourth RO is located includes:
determining that the third RO and/or the fourth RO is located in the FR2, and the first predetermined mapping relationship is one of:

a fifth predetermined mapping relationship, in which the fifth predetermined mapping relationship is used for random access configuration of an unpaired spectrum in the FR2; or
a sixth predetermined mapping relationship, in which the sixth predetermined mapping relationship is used for random access configuration of an unpaired spectrum in the FR2 for the first type terminal.

In some embodiments, the second predetermined mapping relationship, the third predetermined mapping relationship, the fourth predetermined mapping relationship, the fifth predetermined mapping relationship and/or the sixth predetermined mapping relationship is a mapping relationship determined based on protocol rule information.

FIG. 4 is a flowchart illustrating a method for information transmission according to an exemplary embodiment. As shown in FIG. 4, embodiments of the disclosure relate to a method for information transmission. The method is performed by a network device 102 and includes the following step S4101.

At step S4101, first information is sent.

The first information includes an RO configuration, and the RO configuration includes at least one of a time-domain position or a frequency-domain position of ROs; the RO configuration is configured for a terminal to determine at least one of the following parameters corresponding to valid ROs in the ROs: an SSB index, or a set of random access preambles available on the valid ROs; the valid ROs includes: first ROs and second ROs; a symbol where the first RO is located is a first SBFD symbol, and a symbol where the second RO is located is a non-SBFD symbol or a second SBFD symbol.

In some embodiments, a first type terminal supports the first RO and the second RO.

In some embodiments, the RO configuration is used by the first type terminal to determine at least one SSB index corresponding to each of the first ROs in one cycle mapping.

In some embodiments, in one cycle mapping, each SSB index among N SSB indices is mapped to m different first ROs, in which the N SSB indices are not mapped to the second ROs; and m is a positive integer, and the N SSB indices are all SSB indices configured by a network device.

In some embodiments, the RO configuration is configured to determine at least one first SSB index corresponding to each of the first ROs, and at least one second SSB index corresponding to each of the second ROs.

In some embodiments, the RO configuration is configured for the first type terminal to use a first set of random access preambles on each of the second ROs, in which the first set of random access preambles is not intersected with a second set of random access preambles; the second set of random access preambles is a set of random access preambles adopted by a second type terminal within each of the second ROs; and the second type terminal does not support the first ROs.

In some embodiments, the at least one second SSB index corresponding to each of the second ROs is the same as at least one third SSB index adopted by a second type terminal for each of the second ROs.

In some embodiments, the RO configuration is used by the first type terminal to determine the at least one third SSB index adopted by the second type terminal for each of the second ROs; and form a third set of SSB indices including all the third SSB indices, in which the first SSB index is a remaining SSB index among N SSB indices after removing the third set of SSB indices, and the N SSB indices are all SSB indices configured by a network device.

In some embodiments, the first type terminal performs k cycle mappings of N SSB indices within one association period, in which k is a positive integer; and

in one cycle mapping, each SSB index among the N SSB indices is mapped to m different valid ROs, in which m is a positive integer; and the N SSB indices are all SSB indices configured by a network device.

In some embodiments, the first type terminal maps the SSB indices to the valid ROs based on a first manner, and the first manner includes at least one of:

mapping the SSB indices in ascending order to a plurality of valid ROs with the same time domain position, the plurality of valid ROs being in an ascending order of frequency domain positions; or

mapping the SSB indices in ascending order to a plurality of valid ROs with different time-domain positions, the plurality of valid ROs being in an order from front to back of time-domain positions.

In some embodiments, the first information includes at least one of:

frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

In some embodiments, the first SBFD symbol includes: a symbol for which the network device configures a CC as DL via a first signaling and configures the symbol as an SBFD symbol via a second signaling; and

the second SBFD symbol includes: a symbol for which the network device configures the CC as F or UL via a first signaling and configures the symbol as an SBFD symbol via a second signaling.

In some embodiments, the first signaling includes: a TDD UL-DL common configuration; and

the second signaling includes: a semi-static SBFD configuration.

In some embodiments, the RO configuration is used by the second type terminal to determine at least one SSB index corresponding to each of the second ROs in one cycle mapping.

In some embodiments, the second type terminal performs i cycle mappings of N SSB indices within one association period, in which i is a positive integer; and

in one cycle mapping, each SSB index among the N SSB indices is mapped to j different valid ROs, in which j is a positive integer; and the N SSB indices are all SSB indices configured by a network device.

In some embodiments, optional implementations of the step S4101 may refer to optional implementations of the step S2101 in FIG. 2a and other related parts in the embodiments associated with FIG. 2a, which are not repeated herein.

FIG. 5 is an interaction flowchart illustrating a method for information transmission according to an embodiment. As shown in FIG. 5, embodiments of the disclosure relate to a method for information transmission. The method is applied into a communication system 100. The method includes at least one of the following steps S5101 to S5102.

At step S5101, a network device sends first information to a first type terminal, in which the first information includes an RO configuration, and the RO configuration includes at least one of a time-domain position or a frequency-domain position of ROs.

Optional implementations of the step S5101 may refer to the step S2101 in FIG. 2a, the step S3101 in FIG. 3a, the step S4101 in FIG. 4, and other related parts in the embodiments associated with FIG. 2a, FIG. 3a, and FIG. 4, which are not repeated herein.

At step S5102, the first type terminal determines, based on the RO configuration, an SSB index corresponding to valid ROs in the ROs, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol.

In some embodiments, the first type terminal supports the first ROs and the second ROs.

Optional implementations of the step S5102 may refer to the step S2102 in FIG. 2a, the step S3102 in FIG. 3a, and other related parts in the embodiments associated with FIG. 2a, FIG. 3a, FIG. 3b, and FIG. 4, which are not repeated herein.

In some embodiments, the above method may include methods from embodiments related to the communication system side, the terminal side, the access network device side, the core network side, etc., which are not repeated herein.

A specific example is provided below in combination with any of the above embodiments.

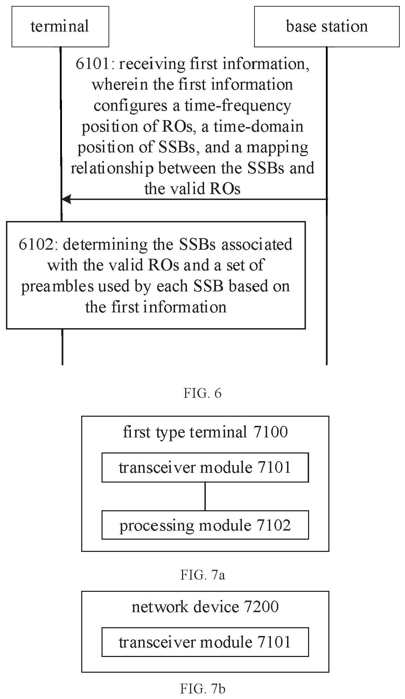

The steps performed on the terminal side are shown in FIG. 6, including steps 6101 to 6102.

At step 6101, first information is received, in which the first information configures a time-frequency position of ROs, a time-domain position of SSBs, and a mapping relationship between the SSBs and the valid ROs.

- In scheme 1-1, a frequency-domain range configured for PRACH and a prach-ConfigurationIndex configured for PRACH are applicable to SBFD symbols and non-SBFD symbols (prior art).
- In scheme 1-2, PRACH configurations for the SBFD symbols and the non-SBFD symbols are differentiated. The differentiated configuration includes at least one of the following options.

  ■ In option 1, a frequency-domain range #1 and a frequency-domain range #2 are configured for the PRACH to avoid segmentation of UL available resources in the non-SBFD symbols.
  ■ In option 2, prach-ConfigurationIndex #1 and prach-ConfigurationIndex #2 are configured for the PRACH to increase the flexibility in configuring new valid ROs and legacy valid ROs.
  ■ In option 3, mapping relationships between the ROs and the SSBs (ssb-perRACH-OccasionAndCB-PreamblesPerSSB #1 and ssb-perRACH-OccasionAndCB-PreamblesPerSSB #2) are configured for the PRACH.
  ■ In option 1, option 2, and option 3,

    ♦ frequency-domain range #1, prach-ConfigurationIndex #1, and ssb-perRACH-OccasionAndCB-PreamblesPerSSB #1 are applicable to

      ➢ symbols configured as F via TDD-UL-DL-ConfigCommon and configured as SBFD.

This ensures that the legacy UEs and the SBFD-aware UEs share the same understanding of the frequency-domain range of the ROs in symbols configured as F via TDD-UL-DL-ConfigCommon.
This ensures that the legacy UEs and the SBFD-aware UEs share the same understanding of the time-domain range of the ROs in symbols configured as F via TDD-UL-DL-ConfigCommon.

    ➢ non-SBFD symbols.

    ♦ frequency-domain range #2, prach-ConfigurationIndex #2, and ssb-perRACH-OccasionAndCB-PreamblesPerSSB #2 are applicable to

      ➢ symbols configured as DL via TDD-UL-DL-ConfigCommon and configured as SBFD.

At step 6102, the SSBs associated with the valid ROs and a set of preambles used by each SSB is determined based on the first information.

- In scheme 2-1, an SBFD-aware UE maps the SSBs only to new valid ROs and does not map SSBs to legacy valid ROs; a legacy UE maps the SSBs to the legacy valid ROs.

  ■ The SBFD-aware UEs determine a first association period (i.e., association period#1_m) and the legacy UEs determine a second association period (i.e., association period#2_n).

    ♦ Within the association period#1_m, each SSB among N SSBs is mapped to m different new valid ROs at least once.
    ♦ Within the association period#2_n, each SSB among N SSBs is mapped to m different legacy valid ROs at least once.

  ■ The SBFD-aware UEs determine a first association pattern period (i.e., association pattern period#1) and the legacy UEs determine a second association pattern period (i.e., association pattern period#2).

    ♦ The association pattern period#1 includes M1 first association periods, i.e., association period#1_m (m=1, ..., M1).
    ♦ The association pattern period#2 includes N1 second association periods, i.e., association period#2_n (n=1, ..., N1).

For example, as shown in FIG. 2b, FIG. 2c, and FIG. 2d, $N_{TX}^{SSB} = 10$ , sb-perRACH-OccasionAndCB-PreamblesPerSSB CHOICE {one n64}, that is, one SSB is mapped to one valid RO. The PRACH configuration period has 10 slots. Within one PRACH configuration period, there are 8 new valid ROs and 4 legacy valid ROs. The specific mapping includes:

1. the first association period, i.e., association period#1_1, including 2 PRACH configuration periods, and no SSB being mapped to the last 6 new valid ROs; and
2. the second association period, i.e., association period#2_1, including 3 PRACH configuration periods, and no SSB being mapped to the last 2 legacy valid ROs.

- In scheme 2-2, an SBFD-aware UE maps SSBs to new valid ROs and legacy valid ROs; a legacy UE maps SSBs to the legacy valid ROs.

  ■ The SBFD-aware UEs determine a first association period (i.e., association period#1_m) and the legacy UEs determine a second association period (i.e., association period#2_n).

    ♦ Within the association period#1_m, each SSB among N SSBs is mapped to m different valid ROs at least once, in which the valid RO is a new valid RO or a legacy valid RO.
    ♦ Within the association period#2_n, each SSB among N SSBs is mapped to m different legacy valid ROs at least once.

  ■ The SBFD-aware UEs determine a first association pattern period (i.e., association pattern period#1) and the legacy UEs determine a second association pattern period (i.e., association pattern period#2).

    ♦ The association pattern period#1 includes M1 first association periods, i.e., association period#1_m (m=1, ..., M1).
    ♦ The association pattern period#2 includes N1 second association periods, i.e., association period#2_n (n=1, ..., N1).

  ■ N0 preambles included in a legacy valid RO are divided into a preamble subset #1 and a preamble subset #2. The two subsets are used for the SBFD-aware UEs and the legacy UEs respectively. Preambles included in a new valid RO do not need to be divided into subsets and are all used for the SBFD-aware UEs.

    ♦ The preamble subset #1 includes the $0^{th}$ to $(N0/2 - 1)^{th}$ preambles, or the preamble subset #1 includes the $(N0/2)^{th}$ to $N0^{th}$ preambles.

For example, as shown in FIG. 2e, FIG. 2f, and FIG. 2g, $N_{TX}^{SSB} = 10$ , ssb-perRACH-OccasionAndCB-PreamblesPerSSB CHOICE {one n64}, that is, one SSB is mapped to one valid RO. The PRACH configuration period has 10 slots. Within one PRACH configuration period, there are 8 new valid ROs and 4 legacy valid ROs. The specific mapping includes:

1. the first association period, i.e., association period#1_1, including one PRACH configuration period, and no SSB being mapped to the last 2 legacy valid ROs;
2. The second association period, i.e., association period#2_1, including three PRACH configuration periods, and no SSB being mapped to the last 2 legacy valid ROs; and
3. SSBs being mapped to the legacy valid ROs.

    1) For an SBFD-aware UE, in slot #4, SSB #4 is mapped to RO #4 and SSB #5 is mapped to RO #5; RO #10 and RO # 11 in slot #9 are remaining ROs after one cycle mapping, and no SSB is mapped to RO #10 and RO # 11.
    2) For a legacy UE, in slot #4, SSB #0 is mapped to RO #0 and SSB #1 is mapped to RO #1; in slot #9, SSB #2 is mapped to RO #2 and SSB #3 is mapped to RO #3.
    3) The SBFD-aware UE and the legacy UE have different SSBs mapped to the ROs in slot #4. The SBFD-aware UE and the legacy UE are distinguished by preambles. For example, preambles {0~31} is used for the SBFD-aware UE and preambles {32~63} is used for the legacy UE.

- In scheme 2-3, an SBFD-aware UE maps SSBs to new valid ROs and legacy valid ROs; a legacy UE maps SSBs to the legacy valid ROs. All SSBs constitute an SSB set #0.

  ■ The SBFD-aware UEs determine a first association period (i.e., association period#1_m) and the legacy UEs determine a second association period (i.e., association period#2_n).

    ♦ Within the association period#2_n, each SSB among N SSBs is mapped to m different legacy valid ROs at least once.

A first manner includes: mapping SSBs to valid ROs sequentially based on frequency domain first, then time domain.

♦ Within the association period#1_m, each SSB among N SSBs is mapped to m different valid ROs at least once, in which the valid RO is a new valid RO or a legacy valid RO.

➢ The association period#1_m is an integer multiple of an SBFD slot format configuration period.
➢ A legacy valid RO set #1 within the association period#1_m that needs to be mapped with the SSBs is determined. In the association period#2_n, an SSB set #1 is mapped to the legacy valid RO set #1.
➢ Within the association period#1_m, SSBs of an SSB set #2 are mapped to the new valid ROs based on the first manner, in which the SSB set #2 is a complement of the SSB set #1 in the SSB set #0.

■ The SBFD-aware UEs determine a first association pattern period (i.e., association pattern period#1) and the legacy UEs determine a second association pattern period (i.e., association pattern period#2).

♦ The association pattern period#1 includes M1 first association periods, i.e., association period#1_m (m=1, ..., M1).
♦ The association pattern period#2 includes N1 second association periods, i.e., association period#2_n (n=1, ..., N1).

For example, as shown in FIG. 2h, FIG. 2i, and FIG. 2j, $N_{TX}^{SSB} = 10$ , ssb-perRACH-OccasionAndCB-PreamblesPerSSB CHOICE {one n64}, that is, one SSB is mapped to one valid RO. The PRACH configuration period has 10 slots. Within one PRACH configuration period, there are 8 new valid ROs and 4 legacy valid ROs. The specific mapping includes:

1. the second association period, i.e., association period#2_1, including three PRACH configuration periods, and no SSB being mapped to the last 2 legacy valid ROs; and
2. the first association period, i.e., association period#1_m, including one PRACH configuration period, and no SSB being mapped to the last 2 legacy valid ROs.

1) For association period#1_1.

i. A legacy valid RO set #1 (the legacy valid ROs in slot #4) within the association period#1_1 that needs to be mapped with SSBs is determined. In the association period#2_1, an SSB set #1 (SSB #0, 1) is mapped to the legacy valid RO set #1.
ii. Within the association period#1_1, SSBs of an SSB set #2 (SSB #2, 3, 4, 5, 6, 7, 8, 9) are mapped to new valid ROs based on the first manner, in which the SSB set #2 is a complement of the SSB set #1 in the SSB set #0.

2) For association period#1_2.

i. A legacy valid RO set # 1 (the legacy valid ROs in slot #14) within the association period#1_2 that needs to be mapped with SSBs is determined. In the association period#2_1, an SSB set #1 (SSB #4, 5) is mapped to the legacy valid RO set #1.
ii. Within the association period#1_1, SSBs of an SSB set #2 (SSB #0, 1, 2, 3, 6, 7, 8, 9) are mapped to new valid ROs based on the first manner, in which the SSB set #2 is a complement of the SSB set #1 in the SSB set #0.

3) For association period#1_3.

i. A legacy valid RO set #1 (the legacy valid ROs in slot #24) within the association period#1_3 that needs to be mapped with SSBs is determined. In the association period#2_1, an SSB set #1 (SSB #8, 9) is mapped to the legacy valid RO set #1.
ii. Within the association period#1_1, SSBs of an SSB set #2 (SSB #0, 1, 2, 3, 4, 5, 6, 7) are mapped to new valid ROs based on the first manner, in which the SSB set #2 is a complement of the SSB set #1 in the SSB set #0.

On the base station side, the specific method is as described on the terminal side and is not repeated herein.

The embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be understood that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7a is a block diagram illustrating a first type terminal according to an embodiment. As shown in FIG. 7a, a first type terminal 7100 may include at least one of: a transceiver module 7101, a processing module 7102, and etc. In some embodiments, the transceiver module 7101 is configured to receive first information, in which the first information includes an RO configuration, and the RO configuration includes at least one of a time-domain position or a frequency-domain position of ROs. The processing module 7102 is configured to determine, based on the RO configuration, at least one of the following parameters corresponding to valid ROs in the ROs: an SSB index, or a set of random access preambles available on the valid ROs, in which the valid ROs include first ROs and second ROs; a symbol where the first RO is located is a first SBFD symbol, and a symbol where the second RO is located is a non-SBFD symbol or a second SBFD symbol; and the first type terminal supports the first ROs and the second ROs. Optionally, the transceiver module is configured to perform at least one of the communication steps (e.g., the step S2101, but is not limited herein) such as sending and/or receiving performed by the first type terminal 101 in any of the above methods, which is not repeated herein. Optionally, the processing module 7102 is configured to perform at least one of other steps (e.g., the step S2102, but is not limited herein) performed by the first type terminal 101 in any of the above methods, which is not repeated herein.

FIG. 7b is a block diagram illustrating a network device according to an embodiment. As shown in FIG. 7b, a network device 7200 may include: a transceiver module 7201. In some embodiments, the transceiver module 7201 is configured to send first information, in which the first information includes an RO configuration, and the RO configuration includes at least one of a time-domain position or a frequency-domain position of ROs; the RO configuration is configured for a terminal to determine at least one of the following parameters corresponding to valid ROs in the ROs: an SSB index, or a set of random access preambles available on the valid ROs; the valid ROs includes: first ROs and second ROs; a symbol where the first RO is located is a first SBFD symbol, and a symbol where the second RO is located is a non-SBFD symbol or a second SBFD symbol; and a first type terminal supports the first RO and the second RO. Optionally, the transceiver module is configured to perform at least one of the communication steps (e.g., the step S2101, but is not limited herein) such as sending and/or receiving performed by the network device 102 in any of the above methods, which is not repeated herein.

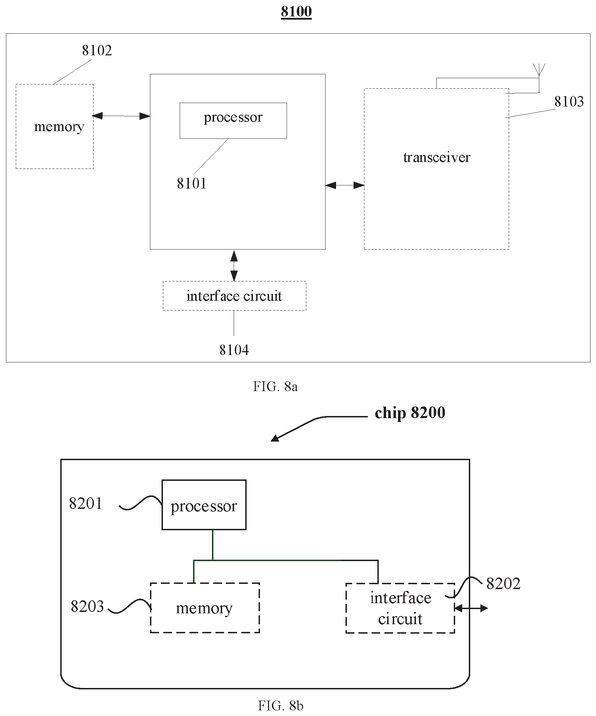

FIG. 8a is a block diagram of a communication device 8100 according to an embodiment of the disclosure. The communication device 8100 may be a network device (such as an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, please refer to the description in the above method embodiments.

As shown in FIG. 8a, the communication device 8100 may include one or more processors 8101. The processor 8100 may be a general purpose processor or a dedicated processor. For example, the processor may be a baseband processor or a CPU. The baseband processor may be configured to process a communication protocol and communication data, and the CPU may be configured to control a communication device (e.g., a base station, a baseband chip, a terminal, a terminal chip, a DU or CU, etc.), execute a computer program, and process data of the computer program. Optionally, the communication device 8100 is configured to perform any one of the above methods. Optionally, one or more processors 8101 are configured to call instructions so that the communication device 8100 may perform any one of the above methods.

In some embodiments, the communication device 8100 further includes one or more transceivers 8102. When the communication device 8100 includes one or more transceivers 8102, the transceiver 8102 performs at least one of the communication steps (e.g., the steps S2101, S2201 and S2202, but is not limited herein) such as sending and/or receiving in the above method, and the processor 8101 performs at least one of other steps (e.g., the steps S2102, S2103 and S2203, but is not limited herein). In optional embodiments, the transceiver may include a receiver and a transmitter, which may be separate or integrated together. Optionally, the terms such as transceiver, transceiver unit, transceiving circuit, interface circuit, interface, etc. may be used interchangeably; the terms such as transmitter, transmission unit, transmitting circuit, etc. may be used interchangeably; and the terms such as receiver, reception unit, receiving circuit, etc. may be used interchangeably.

Optionally, the communication device 8100 further includes one or more memories 8103 for storing instructions. Optionally, all or some of the memories 8103 may also be located outside the communication device 8100. In optional embodiments, the communication device 8100 further includes one or more interface circuits 8104. Optionally, the interface circuit 8104 is connected to the memory 8102. The interface circuit 8104 may be configured to receive data from the memory 8102 or other devices, and may be configured to send data to the memory 8102 or other devices. For example, the interface circuit 8104 may read data stored in the memory 8102 and send the data to the processor 8101.

The communication device 8100 in the above embodiments may be a network device or a terminal, but a scope of the communication device 8100 in the disclosure is not limited to this, and a structure of the communication device 8100 may not be limited by FIG. 8a. The communication device may be an independent device or a part of a larger device. For example, the communication device may be: 1) an independent IC, or a chip, or a chip system or a subsystem; 2) a collection including one or more IC, optionally, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 8b is a block diagram of a chip 8200 according to an embodiment of the disclosure. For a case where the communication device 8100 may be a chip or a chip system, reference may be made to the block diagram of the chip 8200 shown in FIG. 8b, but not limited to herein.

The chip 8200 includes one or more processors 8201. The chip 8200 is used to perform any of the above methods.

In some embodiments, the chip 8200 further includes one or more interface circuits 8202. Optionally, the terms such as interface circuit, interface, transceiver pin, transceiver, etc. may be used interchangeably. In some embodiments, the chip 8200 further includes one or more memories 8203 for storing data. Optionally, all or some of the memories 8203 may be located outside the chip 8200. Optionally, the interface circuit 8202 is connected to a memory 8203. The interface circuit 8202 may be configured to receive data from the memory 8203 or other devices, and may be configured to send data to the memory 8203 or other devices. For example, the interface circuit 8202 may read the data stored in the memory 8203 and send the data to the processor 8201.

In some embodiments, the interface circuit 8202 performs at least one of the communication steps (e.g., the step S2101, but not limited herein) such as sending and/or receiving in the above methods. The interface circuit 8202 performing the communication steps such as sending and/or receiving in the above methods means that, for example, the interface circuit 8202 executes data interaction between the processor 8201, the chip 8200, the memory 8203, or the transceiver device. In some embodiments, the processor 8201 performs at least one of other steps (e.g., the step S2102, but not limited herein).

The disclosure also provides a storage medium for storing instructions. When the instructions are running on the communication device 8100, the communication device 8100 is caused to implement any one of the above methods. Optionally, the above storage medium is an electronic storage medium. Optionally, the above storage medium is a computer-readable storage medium, which is not limited to this, and the above storage medium may also be a storage medium readable by other devices. Optionally, the above storage medium may be a non-transitory storage medium, which is not limited to this, and the above storage medium may also be a transitory storage medium.

The disclosure also provides a program product. When the program product is executed by the communication device 8100, the communication device 8100 is caused to implement any one of the above methods. Optionally, the above program product is a computer program product.

The disclosure also provides a computer program. When the computer program is running on a computer, the computer is caused to implement any one of the above methods.

**Claims**

1. A method for information transmission, performed by a first type terminal, comprising:

   receiving first information, wherein the first information comprises a random access channel occasion (RO) configuration, and the RO configuration comprises at least one of a time-domain position or a frequency-domain position of ROs; and
   determining, based on the RO configuration, at least one of the following parameters corresponding to valid ROs in the ROs: a synchronization signal/physical broadcast channel block (SSB) index, or a set of random access preambles available on the valid ROs, wherein the valid ROs comprise first ROs and second ROs; a symbol where the first RO is located is a first subband full-duplex (SBFD) symbol, and a symbol where the second RO is located is a non-SBFD symbol or a second SBFD symbol; and
   the first type terminal supports the first ROs and the second ROs.

2. The method according to claim 1, wherein determining, based on the RO configuration, the SSB index corresponding to the valid ROs in the ROs comprises:
   determining at least one SSB index corresponding to each of the first ROs in one cycle mapping.

3. The method according to claim 2, wherein determining, based on the RO configuration, the SSB index corresponding to the valid ROs in the ROs comprises:

   in one cycle mapping, mapping each SSB index among N SSB indices to m different first ROs,
   wherein the N SSB indices are not mapped to the second ROs; and m is a positive integer, and the N SSB indices are all SSB indices configured by a network device.

4. The method according to claim 1, wherein determining, based on the RO configuration, the SSB index corresponding to the valid ROs in the ROs comprises:
   determining at least one first SSB index corresponding to each of the first ROs, and at least one second SSB index corresponding to each of the second ROs.

5. The method according to claim 4, wherein determining the set of random access preambles available on the valid ROs comprises:
   using a first set of random access preambles on each of the second ROs, wherein the first set of random access preambles is not intersected with a second set of random access preambles; the second set of random access preambles is a set of random access preambles adopted by a second type terminal within each of the second ROs; and the second type terminal does not support the first ROs.

6. The method according to claim 4, wherein the at least one second SSB index corresponding to each of the second ROs is the same as at least one third SSB index adopted by a second type terminal for each of the second ROs.

7. The method according to claim 6, wherein determining the at least one first SSB index corresponding to each of the first ROs, and the at least one second SSB index corresponding to each of the second ROs comprises:

   determining the at least one third SSB index adopted by the second type terminal for each of the second ROs; and
   forming a third set of SSB indices comprising all the third SSB indices,
   wherein the first SSB index is a remaining SSB index among N SSB indices after removing the third set of SSB indices, and the N SSB indices are all SSB indices configured by a network device.

8. The method according to any one of claims 1 to 7, wherein determining the SSB index corresponding to the valid ROs in the ROs comprises:

> performing k cycle mappings of N SSB indices within one association period, wherein k is a positive integer; and in one cycle mapping, mapping each SSB index among the N SSB indices to m different valid ROs, wherein m is a positive integer; and the N SSB indices are all SSB indices configured by a network device.

9. The method according to any one of claims 1 to 8, wherein determining the SSB index corresponding to the valid ROs in the ROs comprises: mapping the SSB indices to the valid ROs based on a first manner, wherein the first manner comprises at least one of:

> mapping the SSB indices in ascending order to a plurality of valid ROs with the same time domain position, the plurality of valid ROs being in an ascending order of frequency domain positions; or
> mapping the SSB indices in ascending order to a plurality of valid ROs with different time-domain positions, the plurality of valid ROs being in an order from front to back of time-domain positions.

10. The method according to any one of claims 1 to 9, wherein the first information comprises at least one of: frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

11. The method according to any one of claims 1 to 10, wherein the first SBFD symbol comprises: a symbol for which the network device configures a carrier component (CC) as downlink (DL) via a first signaling and configures the symbol as an SBFD symbol via a second signaling; and
the second SBFD symbol comprises: a symbol for which the network device configures the CC as flexible (F) or uplink (UL) via a first signaling and configures the symbol as an SBFD symbol via a second signaling.

12. The method according to claim 11, wherein the first signaling comprises: a time division duplexing (TDD) UL-DL common configuration; and
the second signaling comprises: a semi-static SBFD configuration.

13. The method according to claim 1, wherein the first information comprises physical random access channel (PRACH) configuration information for the first type terminal; and the method further comprises at least one of:

> determining a time-domain position of a third RO in the ROs based on the PRACH configuration information; or
> determining time-domain positions of a third RO and a fourth RO in the ROs based on the PRACH configuration information.

14. The method according to claim 13, wherein determining the time-domain position of the third RO in the ROs based on the PRACH configuration information comprises: determining the time-domain position of the third RO based on a PRACH configuration index (prach-ConfigurationIndex) indicated by the PRACH configuration information and a first predetermined mapping relationship; and/or
determining the time-domain positions of the third RO and the fourth RO in the ROs based on the PRACH configuration information comprises: determining the time-domain positions of the third RO and the fourth RO based on the prach-ConfigurationIndex indicated by the PRACH configuration information and a first predetermined mapping relationship.

15. The method according to claim 13 or 14, wherein a symbol where the third RO is located comprises a third SBFD symbol, a symbol where the fourth RO is located does not comprise a third SBFD symbol, and the third SBFD symbol is one of:

> a symbol for which a network device configures a carrier component (CC) as downlink (DL) via a first signaling and configures the symbol as an SBFD symbol via a second signaling; or
> a symbol for which a network device configures a CC as DL or flexible via a first signaling and configures the symbol as an SBFD symbol via a second signaling.

16. The method according to claim 14, further comprising:
determining the first predetermined mapping relationship.

17. The method according to claim 16, wherein determining the first predetermined mapping relationship comprises one of:

determining the first predetermined mapping relationship based on communication protocol rule information;
determining the first predetermined mapping relationship based on higher layer configuration information; or
determining the first predetermined mapping relationship based on indication information dynamically sent by the network device.

18. The method according to claim 16, wherein determining the first predetermined mapping relationship comprises:

determining the first predetermined mapping relationship based on a type of a frequency range (FR) where the third RO and/or the fourth RO is located,
wherein the FR is a frequency range 1 (FR1) or a frequency range 2 (FR2).

19. The method according to claim 18, wherein determining the first predetermined mapping relationship based on the type of the FR where the third RO and/or the fourth RO is located comprises:
determining that the third RO and/or the fourth RO is located in the FR1, and the first predetermined mapping relationship is one of:

a second predetermined mapping relationship, wherein the second predetermined mapping relationship is used for random access configuration of a paired spectrum or a supplementary uplink in the FR1;
a third predetermined mapping relationship, wherein the third predetermined mapping relationship is used for random access configuration of an unpaired spectrum in the FR1; or
a fourth predetermined mapping relationship, wherein the fourth predetermined mapping relationship is used for random access configuration of an unpaired spectrum in the FR1 for the first type terminal.

20. The method according to claim 18, wherein determining the first predetermined mapping relationship based on the type of the FR where the third RO and/or the fourth RO is located comprises:
determining that the third RO and/or the fourth RO is located in the FR2, and the first predetermined mapping relationship is one of:

a fifth predetermined mapping relationship, wherein the fifth predetermined mapping relationship is used for random access configuration of an unpaired spectrum in the FR2; or
a sixth predetermined mapping relationship, wherein the sixth predetermined mapping relationship is used for random access configuration of an unpaired spectrum in the FR2 for the first type terminal.

21. The method according to claim 19 or claim 20, wherein the second predetermined mapping relationship, the third predetermined mapping relationship, the fourth predetermined mapping relationship, the fifth predetermined mapping relationship and/or the sixth predetermined mapping relationship is a mapping relationship determined based on protocol rule information.

22. A method for information transmission, comprising:
sending first information, wherein the first information comprises a random access channel occasion (RO) configuration, and the RO configuration comprises at least one of a time-domain position or a frequency-domain position of ROs; the RO configuration is configured for a terminal to determine at least one of the following parameters corresponding to valid ROs in the ROs: a synchronization signal/physical broadcast channel block (SSB) index, or a set of random access preambles available on the valid ROs; the valid ROs comprise: first ROs and second ROs; a symbol where the first RO is located is a first subband full-duplex (SBFD) symbol, and a symbol where the second RO is located is a non-SBFD symbol or a second SBFD symbol; and a first type terminal supports the first RO and the second RO.

23. The method according to claim 22, wherein the RO configuration is configured for the first type terminal to determine at least one SSB index corresponding to each of the first ROs in one cycle mapping.

24. The method according to claim 23, wherein in one cycle mapping, each SSB index among N SSB indices is mapped to m different first ROs, wherein the N SSB indices are not mapped to the second ROs; and m is a positive integer, and the N SSB indices are all SSB indices configured by a network device.

25. The method according to claim 23, wherein the RO configuration is configured to determine at least one first SSB index corresponding to each of the first ROs, and at least one second SSB index corresponding to each of the second ROs.

26. The method according to claim 25, wherein the RO configuration is configured for the first type terminal to use a first set of random access preambles on each of the second ROs, wherein the first set of random access preambles is not intersected with a second set of random access preambles; the second set of random access preambles is a set of random access preambles adopted by a second type terminal within each of the second ROs; and the second type terminal does not support the first ROs.

27. The method according to claim 26, wherein the at least one second SSB index corresponding to each of the second ROs is the same as at least one third SSB index adopted by a second type terminal for each of the second ROs.

28. The method according to claim 27, wherein the RO configuration is configured for the first type terminal to determine the at least one third SSB index adopted by the second type terminal for each of the second ROs; and form a third set of SSB indices comprising all the third SSB indices, wherein the first SSB index is a remaining SSB index among N SSB indices after removing the third set of SSB indices, and the N SSB indices are all SSB indices configured by a network device.

29. The method according to any one of claims 22 to 26, wherein

the first type terminal performs k cycle mappings of N SSB indices within one association period, wherein k is a positive integer; and
in one cycle mapping, each SSB index among the N SSB indices is mapped to m different valid ROs, wherein m is a positive integer; and the N SSB indices are all SSB indices configured by a network device.

30. The method according to any one of claims 22 to 29, wherein the first type terminal maps the SSB indices to the valid ROs based on a first manner, and the first manner comprises at least one of:

mapping the SSB indices in ascending order to a plurality of valid ROs with the same time domain position, the plurality of valid ROs being in an ascending order of frequency domain positions; or
mapping the SSB indices in ascending order to a plurality of valid ROs with different time-domain positions, the plurality of valid ROs being in an order from front to back of time-domain positions.

31. The method according to any one of claims 22 to 30, wherein the first information comprises at least one of: frequency-domain resources of the first ROs; time-domain resource indices associated with the first ROs; a configuration associated with a mapping relationship between the first ROs and the SSB indices; frequency-domain resources of the second ROs; time-domain resource indices associated with the second ROs; or a configuration associated with a mapping relationship between the second ROs and the SSB indices.

32. The method according to any one of claims 22 to 31, wherein the first SBFD symbol comprises: a symbol for which the network device configures a carrier component (CC) as downlink (DL) via a first signaling and configures the symbol as an SBFD symbol via a second signaling; and
the second SBFD symbol comprises: a symbol for which the network device configures the CC as flexible (F) or uplink (UL) via a first signaling and configures the symbol as an SBFD symbol via a second signaling.

33. The method according to claim 32, wherein the first signaling comprises: a time division duplexing (TDD) UL-DL common configuration; and
the second signaling comprises: a semi-static SBFD configuration.

34. The method according to any one of claims 22 to 23, wherein the RO configuration is configured for the second type terminal to determine at least one SSB index corresponding to each of the second ROs in one cycle mapping.

35. The method according to claim 34, wherein

the second type terminal performs i cycle mappings of N SSB indices within one association period, wherein i is a positive integer; and
in one cycle mapping, each SSB index among the N SSB indices is mapped to j different valid ROs, wherein j is a positive integer; and the N SSB indices are all SSB indices configured by a network device.

**36.** A method for information transmission, comprising:

sending, by a network device, first information to a first type terminal, wherein the first information comprises a random access channel occasion (RO) configuration, and the RO configuration comprises at least one of a time-domain position or a frequency-domain position of ROs; and

determining, by the first type terminal based on the RO configuration, at least one of the following parameters corresponding to valid ROs in the ROs: a synchronization signal/physical broadcast channel block (SSB) index, or a set of random access preambles available on the valid ROs, wherein the valid ROs comprise first ROs and second ROs; a symbol where the first RO is located is a first subband full-duplex (SBFD) symbol, and a symbol where the second RO is located is a non-SBFD symbol or a second SBFD symbol; and the first type terminal supports the first ROs and the second ROs.

**37.** A first type terminal, comprising:

a transceiver module, configured to receive first information, wherein the first information comprises a random access channel occasion (RO) configuration, and the RO configuration comprises at least one of a time-domain position or a frequency-domain position of ROs; and

a processing module, configured to determine, based on the RO configuration, at least one of the following parameters corresponding to valid ROs in the ROs: a synchronization signal/physical broadcast channel block (SSB) index, or a set of random access preambles available on the valid ROs, wherein the valid ROs comprise first ROs and second ROs; a symbol where the first RO is located is a first subband full-duplex (SBFD) symbol, and a symbol where the second RO is located is a non-SBFD symbol or a second SBFD symbol; and the first type terminal supports the first ROs and the second ROs.

**38.** A network device, comprising:
a transceiver module, configured to send first information, wherein the first information comprises a random access channel occasion (RO) configuration, and the RO configuration comprises at least one of a time-domain position or a frequency-domain position of ROs; the RO configuration is configured for a terminal to determine at least one of the following parameters corresponding to valid ROs in the ROs: a synchronization signal/physical broadcast channel block (SSB) index, or a set of random access preambles available on the valid ROs; the valid ROs comprise: first ROs and second ROs; a symbol where the first RO is located is a first subband full-duplex (SBFD) symbol, and a symbol where the second RO is located is a non-SBFD symbol or a second SBFD symbol; and a first type terminal supports the first RO and the second RO.

**39.** A communication system, comprising:
a network device, configured to perform the method according to any one of claims 1 to 21, and a first type terminal, configured to perform the method according to any one of claims 22 to 35.

**40.** A communication device, comprising:

one or more processors;
wherein the one or more processors are configured to call instructions to cause the communication device to perform the method according to any one of claims 1 to 21 or the method according to any one of claims 22 to 35.

**41.** A storage medium storing instructions, wherein the instructions, when executed on a communication device, cause the communication device to implement the method according to any one of claims 1 to 21, or to implement the method according to any one of claims 22 to 35.

communication system 100

terminal 101 ——— network device 102

FIG. 1a

frequency

|   |   |   |   |   |   |
|---|---|---|---|---|---|

DL     SBFD     SBFD     SBFD     UL     time

DL
UL
GB

FIG. 1b

FIG. 1c

SBFD symbol                                    UL symbol

#0            #1            #2            #3            #4

[∴] new valid RO
[⊠] legacy valid RO

FIG. 1d

one PRACH slot includes
2 ROs in the frequency
domain

one PRACH slot includes 1
RO in the time domain

[∴] new valid RO
[⊠] legacy valid RO

starting
RB

#0    #1    #2    #3    #4    #5    #6    #7    #8    #9

FIG. 1e

FIG. 1f

FIG. 1g

new valid RO

legacy valid RO

new valid RO without mapping SSBs

legacy valid RO without mapping SSBs

30ms, remaining valid ROs are insufficient for one cycle mapping

frequency

association period#1=40ms

association period#2=50ms

association period#3=40ms

RO#1 (SSB #0)  RO#3 (SSB #1)  RO#5 (SSB #2)  RO#29 (SSB# 14)  RO#31 (SSB# 15)  RO#33  RO#35  RO#1 (SSB #0)  RO#3 (SSB #1)  RO#5 (SSB #2)  RO#29 (SSB# 14)  RO#31 (SSB# 15)  RO#33  RO#35  RO#1 (SSB #0)  RO#3 (SSB #1)  RO#5 (SSB #2)  RO#29 (SSB# 14)  RO#31 (SSB# 15)  RO#33  RO#35  RO#1  RO#3  RO#5  RO#7  RO#9  RO#11

RO#0 (SSB #0)  RO#2 (SSB #1)  RO#4 (SSB #2)  RO#28 (SSB# 14)  RO#30 (SSB# 15)  RO#32  RO#34  RO#0 (SSB #0)  RO#2 (SSB #1)  RO#4 (SSB #2)  RO#28 (SSB# 14)  RO#30 (SSB# 15)  RO#32  RO#34  RO#0 (SSB #0)  RO#2 (SSB #1)  RO#4 (SSB #2)  RO#28 (SSB# 14)  RO#30 (SSB# 15)  RO#32  RO#34  RO#0  RO#2  RO#4  RO#6  RO#8  RO#10

time

association pattern period

FIG. 1h

FIG. 2a

FIG. 2b

FIG. 2c

frequency

configuration period

legacy valid RO

legacy valid RO without mapping SSBs

| RO#1 (SSB# 1) | RO#3 (SSB# 3) | RO#5 (SSB# 5) | RO#7 (SSB# 7) | RO#9 (SSB# 9) | RO#11 |
| RO#0 (SSB# 0) | RO#2 (SSB# 2) | RO#4 (SSB# 4) | RO#6 (SSB# 6) | RO#8 (SSB# 8) | RO#10 |

#4     #9     #14     #19     #24     #29

time

second association period

FIG. 2d

one PRACH slot includes 2 ROs in the frequency domain

one PRACH slot includes 1 RO in the frequency domain

new valid RO

legacy valid RO

starting RB

DL

UL

#0   #1   #2   #3   #4   #5   #6   #7   #8   #9

FIG. 2e

new valid RO

new valid RO without mapping SSBs

legacy valid RO

legacy valid RO without mapping SSBs

frequency

configuration period

| RO#1 (SSB# 1) | RO#3 (SSB# 3) | RO#5 (SSB# 5) | RO#7 (SSB# 7) | RO#9 (SSB# 9) | RO#11 |
| RO#0 (SSB# 0) | RO#2 (SSB# 2) | RO#4 (SSB# 4) | RO#6 (SSB# 6) | RO#8 (SSB# 8) | RO#10 |

#2     #3     #4     #7     #8     #9

time

first association period

FIG. 2f

frequency

configuration period

legacy valid RO

legacy valid RO without mapping SSBs

| RO#1 (SSB# 1) | RO#3 (SSB# 3) | RO#5 (SSB# 5) | RO#7 (SSB# 7) | RO#9 (SSB# 9) | RO#11 |
| RO#0 (SSB# 0) | RO#2 (SSB# 2) | RO#4 (SSB# 4) | RO#6 (SSB# 6) | RO#8 (SSB# 8) | RO#10 |

#4    #9    #14    #19    #24    #29

time

second association period

FIG. 2g

one PRACH slot includes 2 ROs in the frequency domain

one PRACH slot includes 1 RO in the frequency domain

new valid RO

legacy valid RO

starting RB

DL
UL

#0    #1    #2    #3    #4    #5    #6    #7    #8    #9

FIG. 2h

frequency

configuration period

legacy valid RO

legacy valid RO without mapping SSBs

| RO#1 (SSB# 1) | RO#3 (SSB# 3) | RO#5 (SSB# 5) | RO#7 (SSB# 7) | RO#9 (SSB# 9) | RO#11 |
| RO#0 (SSB# 0) | RO#2 (SSB# 2) | RO#4 (SSB# 4) | RO#6 (SSB# 6) | RO#8 (SSB# 8) | RO#10 |

#4    #9    #14    #19    #24    #29

time

second association period_1

FIG. 2i

EP 4 750 186 A1

FIG. 2j

48

S3101: obtaining first information

S3102: determining an SSB index corresponding to valid ROs in the ROs and/or a set of random access preambles available on the valid ROs

S3103: determining a time-domain position of a third RO and/or a fourth RO in the ROs

FIG. 3a

S3201: receiving, by a first terminal, first information

FIG. 3b

S4101: sending first information

FIG. 4

first type terminal 101

network device 102

S5101: sending, by a network device, first information to a first type terminal, wherein the first information includes an RO configuration, and the RO configuration includes at least one of a time-domain position or a frequency-domain position of ROs

S5102: determining, by the first type terminal based on the RO configuration, an SSB index corresponding to valid ROs in the ROs and/or a set of random access preambles available on the valid ROs, wherein the valid ROs include first ROs and second ROs; a symbol where the first RO is located is a first SBFD symbol, and a symbol where the second RO is located is a non-SBFD symbol or a second SBFD symbol

FIG. 5

```
┌──────────┐                          ┌──────────────┐
│ terminal │                          │ base station │
└────┬─────┘                          └──────┬───────┘
```

6101: receiving first information,
wherein the first information
configures a time-frequency
position of ROs, a time-domain
position of SSBs, and a mapping
relationship between the SSBs and
the valid ROs

6102: determining the SSBs associated
with the valid ROs and a set of
preambles used by each SSB based on
the first information

FIG. 6

first type terminal 7100

transceiver module 7101

processing module 7102

FIG. 7a

network device 7200

transceiver module 7101

FIG. 7b

**8100**

FIG. 8a

**chip 8200**

FIG. 8b

## INTERNATIONAL SEARCH REPORT

International application No.

**PCT/CN2024/089222**

| A. | CLASSIFICATION OF SUBJECT MATTER |
| --- | --- |

H04W72/04(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC: 随机接入, RACH, 机会, 时机, RO, SBFD, 子带全双工, SSB, 索引, 映射, 对应, 前导码, 波束, TDD: aware, legacy, UE, random, access, occasions, subband, full duplex, synchronization, index, beam, map, corresponding, associated, preamble

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| E | CN 117136625 A (BEIJING XIAOMI MOBILE SOFTWARE CO., LTD.) 28 November 2023 (2023-11-28) <br> description, paragraphs [0299]-[0330] | 1, 22, 36-41 |
| Y | NOKIA et al. ""R1-2301570, On Subband Non-overlapping Full Duplex"" <br> *3GPP tsg_ran\wg1_rl1*, 03 March 2023 (2023-03-03), <br> sections 2.3.1-2.3.3 | 1-12, 22-41 |
| Y | WO 2022099614 A1 (GUANGDONG OPPO MOBILE TELECOMMUNICATIONS CORP., LTD.) 19 May 2022 (2022-05-19) <br> description, paragraphs [0062]-[0081] and [0102]-[0109] | 1-12, 22-41 |
| A | CN 112888070 A (CHINA ACADEMY OF INFORMATION AND COMMUNICATIONS TECHNOLOGY) 01 June 2021 (2021-06-01) <br> entire document | 1-41 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 June 2024** | **24 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/089222**

| Patent document cited in search report | | | Publication date (day/month/year) | Patent family member(s) | | | Publication date (day/month/year) |
|---|---|---|---|---|---|---|---|
| CN | 117136625 | A | 28 November 2023 | None | | | |
| WO | 2022099614 | A1 | 19 May 2022 | US | 2023276503 | A1 | 31 August 2023 |
| | | | | EP | 4247097 | A1 | 20 September 2023 |
| | | | | EP | 4247097 | A4 | 15 November 2023 |
| CN | 112888070 | A | 01 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023108764 W